(19) Europäisches Patentamt
European Patent Office
Office européen des brevets

(11) Veröffentlichungsnummer: **0 169 168**
**A1**

(12) # EUROPÄISCHE PATENTANMELDUNG

(21) Anmeldenummer: **85810287.4**

(22) Anmeldetag: **21.06.85**

(51) Int. Cl.⁴: **A 01 N 53/00**
// (A01N53/00, 43:54)

(30) Priorität: **27.06.84 CH 3096/84**

(43) Veröffentlichungstag der Anmeldung: **22.01.86 Patentblatt 86/4**

(84) Benannte Vertragsstaaten: **BE CH DE FR GB LI**

(71) Anmelder: **CIBA-GEIGY AG, Klybeckstrasse 141, CH-4002 Basel (CH)**

(72) Erfinder: **De Sousa, Bernardo, Dr., Paradiesstrasse 15, CH-4125 Riehen (CH)**
Erfinder: **Burckhardt, Urs, Dr., Rittergasse 29, CH-4051 Basel (CH)**
Erfinder: **Gallay, Jean Jacques, Dr., Blumenrain 19, CH-4312 Magden (CH)**
Erfinder: **Kühne, Manfred, Dr., Alemannenweg 11, CH-4148 Pfeffingen (CH)**
Erfinder: **Beriger, Ernst, Dr., Grabenmattweg 29, CH-4123 Allschwil (CH)**
Erfinder: **Reinehr, Dieter, Dr., Wolfsheule 10, D-7842 Kandern (DE)**

(54) **Motten- und Käferschutzmittel.**

(57) Es wird ein Mittel zum Schützen von Keratinmaterial, insbesondere von Wolltextilien, vor dem Befall durch Keratinschädlinge, insbesondere durch Motten- und Käferlarven, das eine spezifisch substituierte 5-(Pyridyloxyphenylcarbamoyl)-barbitursäure oder ein Salz davon und ein synthetisches Pyrethroid als Wirkstoffkombination enthält, sowie ein Verfahren zum Ausrüsten besagten Materials gegen den Befall durch Keratinschädlinge unter Verwendung der genannten Wirkstoffkombination beschrieben.

EP 0 169 168 A1

0169168



CIBA-GEIGY AG
Basel (Schweiz)

1-14981/=

## Motten- und Käferschutzmittel

Die vorliegende Erfindung betrifft ein Mittel zum Schützen von Keratinmaterial gegen den Befall durch keratinfressende Schädlinge, insbesondere ein Mittel zum Schützen von Wolle, Pelzen und Federn gegen den Befall und gegen Frassschäden durch Motten- und Käferlarven sowie ein Verfahren zum Schützen der genannten Materialien vor dem Befall durch keratinfressende Schädlinge.

Es ist bekannt, dass gewisse synthetische Pyrethroide zur Bekämpfung von keratinfressenden Schädlingen verwendet werden können. Siehe z.B. J. Text. Inst. 1976, No. 3, Vol. 67, 77; JP-A 58 341; DE-A 29 23 217; US-A 4,219,593; EP-B 11 789. Diese Pyrethroide wirken sehr gut gegen Mottenlarven, während die Wirkung gegen Larven von Pelz- und Teppichkäfern weniger ausgeprägt ist. Aus der US-A 4,283,444 ist ausserdem bekannt, dass gewisse 5-Phenylcarbamoylbarbitursäuren ebenfalls zur Bekämpfung von Keratinschädlingen eingesetzt werden können. Diese zeigen eine besonders gute Wirkung gegenüber Pelz- und Teppichkäferlarven. In der US-A 4,283,444 sind auch Mittel beschrieben, die eine Kombination aus den genannten synthetischen Pyrethroiden und 5-Phenylcarbamoylbarbitursäuren enthalten,mit deren Hilfe man Keratinmaterialien (z.B. Wolle) ausgezeichnet gegen den Befall durch Keratinschädlinge schützen kann. Die EP-A 105 030 betrifft ebenfalls solche Mittel, die eine Kombination aus synthetischen Pyrethroiden und bestimmten 5-Phenylcarbamoylbarbitursäuren [z.B. 5-(Phenoxyphenylcarbamoyl)-barbitursäuren] enthalten.

Die Mittel gemäss vorliegender Erfindung enthalten ebenfalls ein synthetisches Pyrethroid und spezifisch substituierte 5-Phenylcarbamoylbarbitursäuren, wobei sich diese Mittel von den vorstehend genannten bekannten Mitteln in charakteristischer Weise dadurch

unterscheiden, dass der Phenylring in der 5-Phenylcarbamoylbarbitursäurekomponente durch einen Pyridyloxy- oder Pyridylthiorest substituiert ist. Die erfindungsgemässen Mittel erzielen auf Keratinmaterialien, insbesondere auf Wolle, hervorragende Schutzwirkung gegen Keratinschädlinge, auch dann schon, wenn sie in sehr geringen Konzentrationen eingesetzt werden.

Die erfindungsgemässen Mittel sind dadurch gekennzeichnet, dass sie (A) ein oder mehrere 5-Phenylcarbamoylbarbiturat(e) der Formel

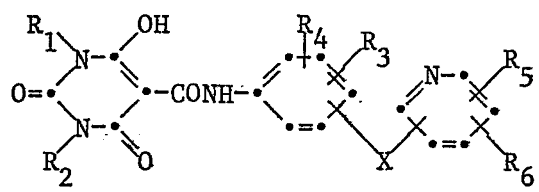

(1)

sowie deren tautomere Formen und Salze, worin $R_1$ und $R_2$ unabhängig voneinander $C_1$-$C_4$-Alkyl, $C_3$-$C_6$-Cycloalkyl, $C_2$-$C_4$-Alkenyl, Benzyl, Phenyl oder mit 1 bis 3 Substituenten aus der Gruppe Halogen, $C_1$-$C_4$-Alkyl, $C_1$-$C_4$-Alkoxy und Nitro substituiertes Phenyl,
$R_3$ und $R_4$ unabhängig voneinander Wasserstoff, Halogen, $C_1$-$C_4$-Halogenalkyl, $C_1$-$C_4$-Alkyl, $C_2$-$C_4$-Alkenyl, $C_3$-$C_6$-Cycloalkyl oder Methoxy,
$R_5$ und $R_6$ unabhängig voneinander Wasserstoff, Halogen, $C_1$-$C_4$-Alkyl, $C_1$-$C_4$-Halogenalkyl oder Methoxy und
X Sauerstoff oder Schwefel bedeuten,
und

(B) ein oder mehrere synthetische(s) Pyrethroid(e) enthalten.

Beispielsweise enthalten erfindungsgemässe Mittel solche Verbindungen der Formel (1), worin X Sauerstoff bedeutet und der Pyridinring über die 2-Stellung an das Sauerstoffatom gebunden ist.

Die 5-Phenylcarbamoylbarbiturate der Formel (1) (Komponente (A)) liegen in verschiedenen tautomeren Formen (Keto/Enol-Tautomerie) etwa nach dem folgenden Schema vor:

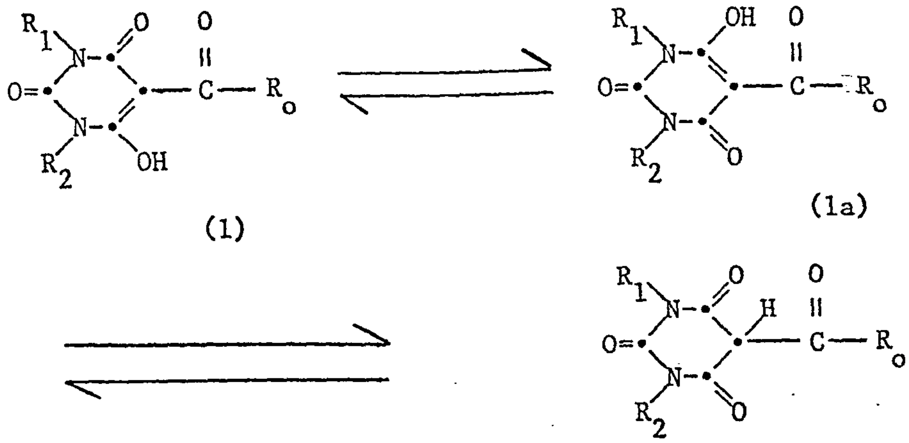

(1) (1a) (1b),

wobei in obigen Formeln $R_o$ jeweils für den Rest

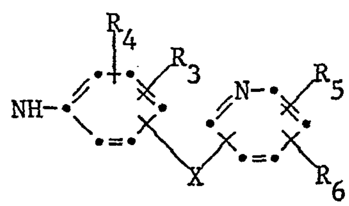

steht.

Alle tautomeren Formen bzw. deren Mischungen können im erfindungsgemässen Mittel eingesetzt werden. Die einzelnen Formeln umfassen daher auch die jeweils möglichen tautomeren Formen.

Die Wirkstoffe der Formel (1) können im erfindungsgemässen Mittel auch in Form ihrer Salze eingesetzt werden. Unter den Salzen sind die Alkalimetall-, Ammonium- oder Aminsalze besonders zu erwähnen, wobei Natrium-, Kalium-, Ammonium- oder Alkylamin-, insbesondere Triäthylaminsalze, bevorzugt sind.

Von den 5-Phenylcarbamoylbarbitursäureverbindungen der Formel (1) werden bevorzugt solche eingesetzt, in denen X Sauerstoff bedeutet.

Bevorzugte Verbindungen der Formel (1) entsprechen der Formel

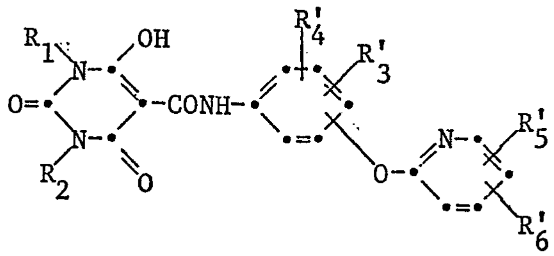 (2),

worin $R_1$ und $R_2$ wie in Formel (1) definiert sind und $R'_3$, $R'_4$, $R'_5$ und $R'_6$ unabhängig voneinander Wasserstoff, Halogen, $C_1$-$C_4$-Alkyl, $C_1$-$C_4$-Halogenalkyl oder Methoxy bedeuten.

Insbesondere steht in Verbindungen der Formel (1) bzw. (2) der

Substituent 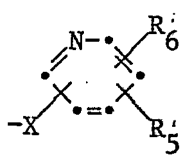 bzw. 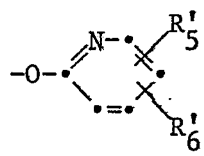 in ortho- oder para-Stellung. $R_1$ und $R_2$ bedeuten in Formel (1) bzw. (2) vorzugsweise $C_1$-$C_4$-Alkyl, insbesondere Methyl oder Aethyl.

Unter "Halogen" ist insbesondere Fluor, Chlor oder Brom zu verstehen, wobei Chlor und Fluor bevorzugt sind.

Unter den $C_1$-$C_4$-Halogenalkylresten (Substituenten $R_3$, $R_4$, $R_5$ und $R_6$ in Formel (1)) sind jene bevorzugt, die 1 oder 2 C-Atome und 1 bis 5 gleiche oder verschiedene Halogenatome, insbesondere Fluor- oder Chloratome, enthalten. Beispiele hierfür sind: 1,1,2-Trifluor-2-chloräthyl, 1,1,2,2-Tetrafluoräthyl, 1,1,2,2-Tetrafluor-2-chloräthyl, Chlordifluormethyl, Dichlorfluormethyl, Dichlormethyl, Difluormethyl, Trichlormethyl und insbesondere Trifluormethyl.

In weiteren bevorzugten Verbindungen der Formel (1) bzw. (2) bedeuten $R_1$ Methyl, Aethyl, Cyclopropyl oder Allyl, vorzugsweise Methyl, $R_2$ Aethyl oder Methyl, vorzugsweise Methyl, $R_3$ und $R_4$ bzw. $R'_3$ und $R'_4$ unabhängig voneinander Wasserstoff, Halogen, insbesondere Chlor, oder $C_1$-$C_4$-Alkyl und $R_5$ und $R_6$ bzw. $R'_5$ und $R'_6$ unabhängig voneinander

Wasserstoff, Halogen, insbesondere Chlor, oder $C_1$-$C_4$-Halogenalkyl, insbesondere Trifluormethyl, und der

Substituent 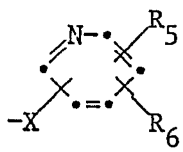 bzw. 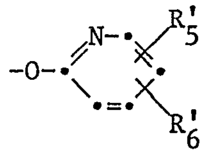 steht in ortho- oder para-Stellung.

Besonders gute Wirkung zeigen jene erfindungsgemässen Mittel, die als Komponente (A) eine Verbindung der Formel (2) enthalten, worin $R_1$ Allyl oder Methyl, vorzugsweise Methyl, $R_2$ Methyl, $R_3'$ und $R_4'$ unabhängig voneinander Wasserstoff, Chlor oder Methyl und $R_5'$ und $R_6'$ unabhängig voneinander Wasserstoff, Chlor oder Trifluormethyl bedeuten. Hervorzuheben sind dabei noch jene Mittel, in deren Komponente (A)

der Formel (2) der Rest 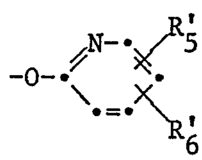 in para-Stellung steht und

$R_5'$ Trifluormethyl und $R_6'$ Wasserstoff bedeuten.

Besonders geeignet als Komponente (A) sind die Verbindungen 1,3-Dimethyl-5-[4-(3,5-dichlorpyridyl-(2)-oxy)-phenylcarbamoyl]-barbitursäure, und insbesondere 1,3-Dimethyl-5-[4-(5-trifluormethyl-pyridyl-(2)-oxy)-phenylcarbamoyl]-barbitursäure.

Die zweite Komponente (Komponente B) der erfindungsgemässen Wirkstoffkombination ist ein synthetisches Pyrethroid. In erfindungsgemässen Mitteln bevorzugte Pyrethroide stammen aus der Klasse der Cyclopropancarbonsäureester oder der α-Alkyl-(insbesondere Isopropyl-) phenylessigsäureester, d.h. sie enthalten die Strukturelemente

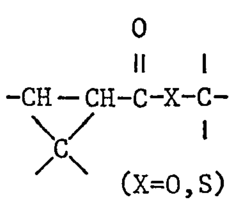
(X=O,S). bzw. 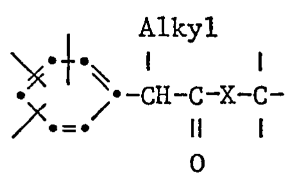

Beispielsweise werden als Pyrethroidkomponente Verbindungen der allgemeinen Formel

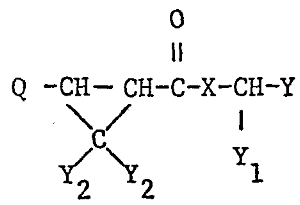 (3),

worin

Q $Br_2C{=}CBr-$, (H, Cl)- 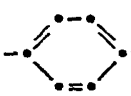 -CH=CH-, Cl-C≡C-, Cl- 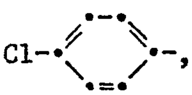 -,

$(CH_3)_3C-O-$, 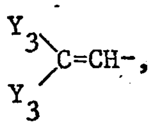, worin $Y_3$ für Cl, Br, $CF_3$, F oder $C_1$-$C_4$-Alkyl steht,

$CH_2{=}CH-CH_2-O-$ oder 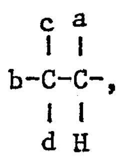, worin a, b, c und d unabhängig voneinander für Cl, Br oder F stehen, wobei c und d auch für Methyl stehen können,

X Sauerstoff oder Schwefel, $Y_1$ Wasserstoff, CN, $CH_3$, $C_2H_5$, $i-C_3H_7$, 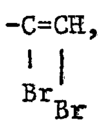, -C≡CH, $-C{\equiv}C-CH_3$, $-C{\equiv}C-C_6H_5$, $-CH{=}CH-CH_3$, $-CH_2-CH{=}CH_2$, $-CH{=}CH_2$ oder $-CH_2-CH{=}CHCl$,

$Y_2$ Methyl oder beide $Y_2$ zusammen die Ergänzung zu einem Cyclopropan-, Cyclobutan- oder Cyclopentanring und

Y 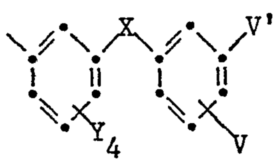,

worin $Y_4$ für Wasserstoff oder Fluor und V für Wasserstoff , Cl, Br, F, $CH_3$ oder $NO_2$ und V' für Wasserstoff stehen, wobei V' für den Fall, dass V Wasserstoff bedeutet, auch für $CF_3$ stehen kann, und X wie oben definiert ist; ferner Y

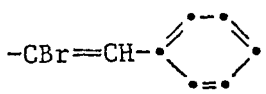 , 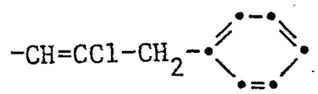 ,

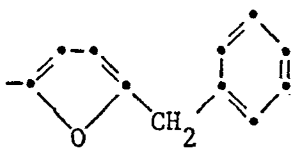 , 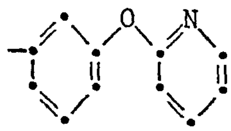 oder 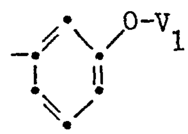 ,

bedeuten,

worin $V_1$ für $-CH_2-CH=CH_2$, $-CH_2-C\equiv CH$, $-CH_2-CH=CH-CH_3$,

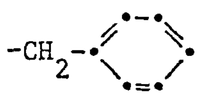 , 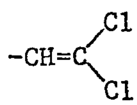 , $-CF=CFCl$ oder $-CF=CF_2$ steht,

oder der allgemeinen Formel

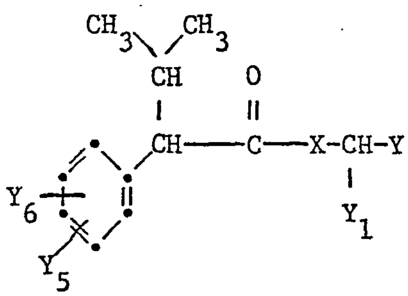

(3a),

worin X, Y und $Y_1$ wie in Formel (3) definiert sind, $Y_5$ Wasserstoff, $CH_3$, Cl, $NO_2$, $OCH_3$, $OCH(CH_3)_2$, $-OCH_2C\equiv CH$ oder $-OCH_2CH=CH_2$ und $Y_6$ Wasserstoff, $CH_3$, Cl, Br oder F oder $Y_5$ und $Y_6$ in ortho-Stellung gemeinsam die Ergänzung zu einem ankondensierten Benzolring bedeuten, eingesetzt, wobei die Verbindungen der Formel (3) bevorzugt verwendet werden.

Als besonders bevorzugte Komponenten (B) können solche der oben definierten Formel (3) eingesetzt werden, worin Q einen Rest der Formel

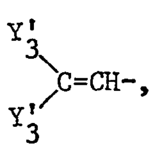

worin $Y'_3$ für Br, Cl oder $CH_3$ steht, X Sauerstoff und Y

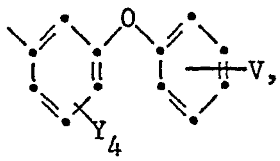

bedeuten. $Y_2$ bedeutet in Formel (3) vorzugsweise $CH_3$ und $Y_1$ Wasserstoff, CN, $CH_3$, $-CH{=}CH_2$, $-C{\equiv}CH$ oder $-C{\equiv}C-CH_3$, insbesondere Wasserstoff oder CN.

In praktisch wichtigen erfindungsgemässen Mitteln ist die Komponente (B) eine Verbindung aus der Klasse der 3-(2',2'-Dihalogenvinyl)-2,2-dimethylcyclopropan-carbonsäure-3"-phenoxybenzylester, insbesondere eine solche der Formel

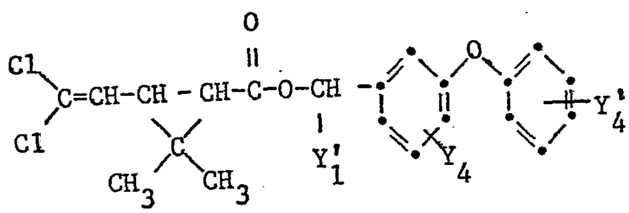

(4);

worin $Y_1'$ Wasserstoff, Cyano, $-CH{=}CH_2$ oder $-C{\equiv}C-CH_3$ und $Y_4$ und $Y_4'$ unabhängig voneinander Wasserstoff oder Fluor bedeuten. Der Trivialname der Verbindung der Formel (4) mit $Y_1'=Y_4=Y_4'=$ Wasserstoff ist Permethrin, jener mit $Y_1'=CN$ und $Y_4=Y_4'=$ Wasserstoff ist Cypermethrin.

Die erfindungsgemässen Mittel können ausschliesslich aus den Komponenten (A) und (B) bestehen oder sie können zusätzlich noch übliche Träger bzw. Formulierungsmittel wie Lösungsmittel, Wasser, Säuren, Basen, Tenside, Netz-, Dispergier- und/oder Emulgiermittel enthalten.

Als Lösungsmittel kommen etwa organische Lösungsmittel, wie z.B. aliphatische und alicyclische Alkohole, Ketone, Kohlenwasserstoffe wie Benzol, Xylole, Toluol, Benzine, ferner chlorierte und fluorierte Kohlenwasserstoffe, insbesondere Propylenglykol, Methoxyäthanol,

Aethoxyäthanol oder Dimethylformamid in Betracht, gegebenenfalls in Mischung mit Wasser.

Als weitere Formulierungsmittel kommen etwa die üblichen,als Netz-, Dispergier- und/oder Emulgiermittel verwendeten oberflächenaktiven Substanzen in Betracht, beispielsweise solche, die weiter unten als Zusätze für Applikationsbäder im erfindungsgemässen Verfahren angeführt sind.

Besonders vorteilhaft enthalten die erfindungsgemässen Mittel Formulierungsbestandteile, die zu einer lagerstabilen, direkt verwendbaren Formulierung führen. Derartige Formulierungsbestandteile sind in der EP-A 74 335 beschrieben (siehe dort Komponenten C bis G). Die vorliegende Erfindung betrifft daher auch Mittel, die die Komponenten (A) und (B) sowie die in der genannten EP-A beschriebenen Komponenten C bis G enthalten. Diese dort beschriebenen Komponenten und ihre bevorzugten Vertreter sowie ihre relativen Mengenverhältnisse werden zum Bestandteil der vorliegenden Beschreibung erklärt.

Die Pyrethroide der Formel (3) (Komponente (B)) sind bekannt. Siehe dazu z.B. die Literaturangaben auf Seite 1. Die 5-(Pyridyloxyphenylcarbamoyl-barbiturate der Formel (1) können nach an sich bekannten Verfahren erhalten werden.

Beispielsweise kann man zur Herstellung von Verbindungen der Formel (1)

a) einen Ester der Formel

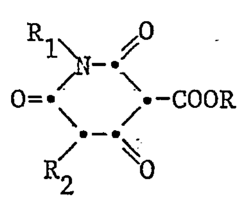

(5)

mit einem Anilinderivat der Formel

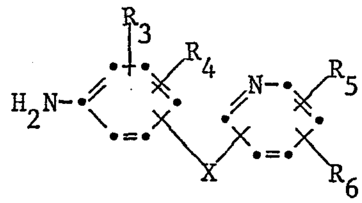

(6),

worin R eine Alkyl- oder eine gegebenenfalls substituierte Phenylgruppe darstellt und die Reste $R_1$ bis $R_6$ und X die unter der Formel (1) angegebenen Bedeutungen besitzen,
oder

b) eine substituierte Barbitursäure der Formel

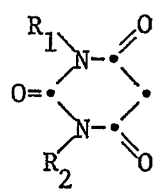

(7)

mit einem substituierten Phenylisocyanat der Formel

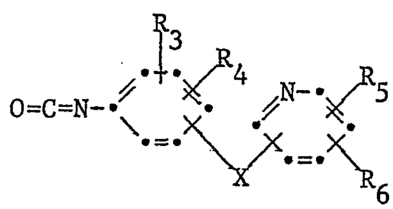

(8),

worin die Reste $R_1$ bis $R_6$ und X die unter Formel (1) angegebenen Bedeutungen besitzen,
oder

c) eine substituierte Barbitursäure der Formel (7) mit einem substituierten Benzoylazid der Formel

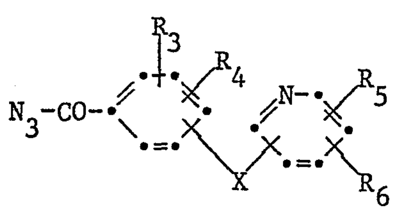

(9),

worin die Reste $R_1$ bis $R_6$ und X die unter Formel (1) angegebene Bedeutung besitzen, umsetzen.

Die Herstellungsvarianten (a) und (c) werden vorteilhaft bei Reaktionstemperaturen zwischen 50° und 250°C, vorzugsweise 70° bis 220°C, durchgeführt. Variante (b) erfordert Reaktionstemperaturen zwischen 0° und 220°C, insbesondere 0° bis 200°C. Die Reaktionen (a), (b) und (c) können bei normalem oder erhöhtem Druck und in Abwesenheit oder vorzugsweise in Gegenwart von Lösungs- oder Verdünnungsmitteln durchgeführt werden, wobei in manchen Fällen vorteilhafterweise in Gegenwart einer Base gearbeitet wird.

Geeignete Lösungs- oder Verdünnungsmittel sind z.B. Aether und ätherartige Verbindungen wie Dialkyläther (Diäthyläther, Diisopropyläther, tert.-Butylmethyläther usw.), Anisol, Dioxan, Tetrahydrofuran; aliphatische und aromatische Kohlenwasserstoffe wie Benzol, Toluol, Petroläther; halogenierte Kohlenwasserstoffe wie Chlorbenzol, Methylenchlorid, Chloroform, Aethylenchlorid, Tetrachlorkohlenstoff, Tetrachloräthylen; Nitrile wie Acetonitril, Propionitril; N,N-dialkylierte Amide wie Dimethylformamid; Dimethylsulfoxid; Ketone wie Aceton, Diäthylketon, Methyläthylketon und Gemische solcher Lösungsmittel untereinander.

Als Basen kommen organische und anorganische Basen in Betracht, z.B. tertiäre Amine wie Trialkylamine (Trimethylamin, Triäthylamin, Tripropylamin usw.), Pyridin und Pyridinbasen (z.B. 4-Dimethylaminopyridin, 4-Pyrrolidylaminopyridin usw.), Picoline und Lutidine sowie Oxide, Hydroxide, Carbonate und Hydrogencarbonate von Alkali- und Erdalkalimetallen (z.B. CaO, BaO, NaOH, KOH, $Ca(OH)_2$, $KHCO_3$, $NaHCO_3$, $Ca(HCO_3)_2$, $K_2CO_3$, $Na_2CO_3$ usw.), ferner Acetate wie z.B. $CH_3COONa$ oder $CH_3COOK$. Darüber hinaus eignen sich als Basen auch Alkalialkoholate wie z.B. Natriumäthylat, Natriumpropylat, Kalium-tert.-butylat oder Natriummethylat. Die Base wird vorteilhafterweise in bezug auf die Reaktanden in 10 bis 100 % der äquimolaren Menge zugesetzt.

In manchen Fällen kann es von Vorteil sein, wenn die Reaktion unter Schutzgasatmosphäre durchgeführt wird. Geeignete Schutzgase sind z.B. Stickstoff, Helium, Argon oder Kohlendioxid.

Die in den Herstellungsvarianten (a), (b) und (c) genannten Ausgangsstoffe sind bekannt (siehe z.B. Chem. Ber. 54, 1038 [1921]) oder können in analoger Weise wie die bekannten Substanzen hergestellt werden.

Die 5-(Pyridyloxyphenylcarbamoyl)-barbitursäuren der Formel (1) sowie Verfahren zu deren Herstellung sind auch in der EP-A 135 155 beschrieben.

Die Herstellung von Verbindungen der Formel (1) wird auch in den nachfolgenden Herstellungsbeispielen illustriert.

Das Mischungsverhältnis der beiden Wirkstoffkomponenten (A) und (B) in den erfindungsgemässen Mitteln (Wirkstoffkombinationen) kann in weiten Grenzen schwanken; es kann beispielsweise zwischen 10:1 und 1:10 vorzugsweise zwischen 8:1 und 1:2 liegen. In besonders bevorzugten erfindungsgemässen Mitteln beträgt dieses Verhältnis etwa 1:1.

Die erfindungsgemässen Mittel können zum Schützen von Keratinmaterial gegen keratinfressende Insekten eingesetzt werden, wie z.B. gegen keratinfressende Larven von Lepidoptera, z.B. Tineola spec. und Tinea spec. sowie gegen keratinfressende Larven von Coleoptera, z.B. Anthrenus spec. und Attagenus spec. Die Mittel eignen sich vorzüglich zum Schützen von keratinischen bzw. keratinhaltigem Material gegen Insektenfrass, insbesondere zur wasch- und lichtechten Ausrüstung gegen Insekten, insbesondere zur Motten- und Käferechtausrüstung von derartigen Materialien. Es kann keratinisches bzw. keratinhaltiges Material sowohl in rohem als auch in verarbeitetem Zustand ausgerüstet werden, z.B. rohe oder verarbeitete Schafwolle, Produkte aus anderen Tierhaaren, Felle, Pelze und Federn.

Praktisch besonders wichtig ist die Wirksamkeit der erfindungsgemässen Mittel gegen die Larven der Kleidermotte (Tineola bisselliella), der Pelzmotte (Tinea pellionella) und der Samenmotte (Hofmannophila pseudopretella) sowie gegen die Larven der Pelz- und Teppichkäfer (Attagenus spec. bzw. Anthrenus spec.), z.B. des Wollkraut-Blütenkäfers (Anthrenus verbasci), des Bibernell-Blütenkäfers (Anthrenus pimpinellae), des Gemeinen Teppichkäfers (Anthrenus scrophilariae), des Bebänderten Teppichkäfers (Anthrenus fasciatus), des Gefleckten Pelzkäfers (Attagenus Pellio) und vor allem des Dunklen Pelzkäfers (Attagenus piceus) und des Teppichkäfers (Anthrenus vorax).

Bevorzugt werden die erfindungsgemässen Mittel einerseits zum Schützen von Textilien aus Wolle, z.B. von Wolldecken, Wollteppichen, Wollwäsche, Wollkleidern und Wirkwaren bzw. wollhaltigen Textilien, wie Mischgeweben, deren eine Komponente Wolle ist, z.B. Mischgeweben aus Wolle und anderen Naturfasern, vorzugsweise Baumwolle,oder aus Wolle und Kunstfasern, andererseits auch zum Schützen von Pelzen und Fellen vor dem Befall durch die erwähnten Schädlinge eingesetzt.

Die vorliegende Erfindung betrifft auch ein Verfahren zum Schützen von Keratinmaterial, insbesondere von Wolltextilien, vor dem Befall durch Keratinschädlinge, z.B. Motten- und Käferlarven, das dadurch gekennzeichnet ist, dass man das zu schützende Material mit einer Kombination aus einem oder mehreren 5-(Pyridyloxyphenylcarbamoyl)-barbiturat(en) der Formel (1) und einem oder mehreren synthetischen Pyrethroid(en), vorzugsweise solchen der Formeln (3) und (3a), behandelt. Zu diesem Zweck wird in der Regel diese Wirkstoffkombination, die als erfindungsgemässes Mittel gegebenenfalls noch übliche Träger bzw. Formulierungshilfsmittel enthalten kann, in eine Applikationsflotte eingebracht, der gegebenenfalls noch übliche Textilhilfsmittel oder/und Farbstoffe zugefügt werden können, und mit dieser Flotte das zu schützende Material imprägniert. Die beiden Wirkstoffkomponenten (A) und (B) können der Applikationsflotte selbstverständlich auch getrennt zugegeben werden.

Die zu schützenden Materialien, insbesondere Textilmaterialien, können z.B. durch heisse oder kalte wässrige Färbe-, Bleich-, Chromierungs- oder Nachbehandlungsbäder, die einen bestimmten Teil einer erfindungsgemässen Wirkstoffkombination enthalten, imprägniert werden, wobei verschiedene Textilausrüstungsverfahren, wie z.B. das Foulard- oder Ausziehverfahren, in Frage kommen.

Die Behandlung erfolgt zweckmässig bei Temperaturen von 10 bis 100°C, im Färbebad vorzugsweise bei etwa 60-100°C, im Nachbehandlungs- oder Waschbad bei vorzugsweise 10 bis 70, insbesondere 20 bis 60°C.

Als zusätzliche Hilfsmittel können den Applikationsflotten z.B. Dispergatoren, Emulgatoren oder Tenside zugegeben werden, sofern nicht schon genügend davon durch das erfindungsgemässe Mittel eingebracht wird. Daneben kann die Flotte auch noch übliche Hilfsstoffe, wie wasserlösliche Perborate, Polyphosphate, Carbonate, Silikate, optische Aufheller, Weichmacher, sauer reagierende Salze, wie Ammonium- oder Zinksilikonfluorid, oder gewisse organische Säuren, wie Oxalsäure, Essigsäure oder besonders Ameisensäure, ferner Antimikrobika und Appreturmittel, z.B. solche auf Kunstharzbasis oder Stärke, enthalten. Falls die Motten- und Käferechtausrüstung gemeinsam mit dem Färben des Materials (z.B. Wolle) durchgeführt wird, enthalten die Flotten auch noch die entsprechenden Farbstoffe und gegebenenfalls die dazu erforderlichen Hilfsmittel, z.B. Egalisiermittel.

Wässrige Applikationsflotten können z.B. Tenside, beispielsweise anionaktive Verbindungen, wie Seifen und andere Carboxylate (z.B. Alkalisalze höherer Fettsäuren), Abkömmlinge von Schwefel-Sauerstoffsäuren (z.B. Natriumsalz der Dodecylbenzolsulfonsäure, wasserlösliche Salze von Schwefelsäuremonoestern höhermolekularer Alkohole oder ihrer Polyglykoläther, wie etwa lösliche Salze von Dodecylalkoholsulfat oder von Dodecylalkoholpolyglykoläther-sulfat), Abkömmlinge von Phosphor-Sauerstoffsäuren (z.B. Phosphate), Abkömmlinge mit saurem (elektrophilem) Stickstoff in der hydrophilen

Gruppe (z.B. Disulfinsalze), kationaktive Tenside, wie Amine und ihre Salze (z.B. Lauryl-diäthylentriamin), Oniumverbindungen, Aminoxide oder nichtionogene Tenside, wie Polyhydroxyverbindungen, Tenside auf Mono- oder Polysaccharidbasis,höhermolekulare Acetylenglykole, Polyglykoläther (z.B. Polyglykoläther höherer Fettalkohole, Polyglykoläther höhermolekular-alkylierter Phenole) enthalten.

Im Falle von nicht-wässriger Applikation (Lösungsmittelapplikation) kann ein entsprechender Teil eines erfindungsgemässen Mittels (Wirkstoffkombination) auch einem geeigneten Lösungsmittel zugegeben werden und mit der so erhaltenen Lösung kann das zu schützende Material imprägniert werden. Als Lösungsmittel kommen hierfür unter anderen Trichloräthylen, Methylenchlorid, Kohlenwasserstoffe, Propylenglykol, Methoxyäthanol, Aethoxyäthanol, Dimethylformamid in Frage, denen noch Verteilungsmittel (z.B. Emulgatoren, wie sulfiertes Ricinusöl, Fettalkoholsulfate usw.) und/oder andere Hilfsstoffe zugesetzt werden können. Die zu schützenden Materialien werden üblicherweise mit diesen Lösungen einfach imprägniert.

Die Ausrüstung der zu schützenden Materialien kann aber auch mit einem Trockenreinigungsprozess kombiniert werden. Ein entsprechender Teil eines erfindungsgemässen Mittels (Wirkstoffkombination) wird zu diesem Zweck im Reinigungsmittel (etwa niedere halogenierte Alkane, z.B. Trichloräthylen usw.)gelöst und der Reinigungsprozess wird wie üblich durchgeführt.

Ein Anteil eines erfindungsgemässen Mittels (Wirkstoffkombination) kann aber auch in leicht flüchtigen organischen Lösungsmitteln gelöst werden und diese Lösung kann dann auf das zu schützende Substrat aufgesprüht werden (Sprühapplikation). Für diese Applikationsart eignen sich vor allem wollhaltige Textilien, Pelze und Federn. Der Vorteil der Sprühapplikation besteht darin, dass wegen der Rückgewinnung der Lösungsmittel eine Belastung der Abwässer vermieden wird.

Im erfindungsgemässen Verfahren können die erfindungsgemässen Mittel auch in Kombination mit anderen gegen keratinfressende Insekten wirksamen Schutzmitteln angewendet werden, z.B. in Kombination mit Harnstoffderivaten, Benzimidazolen, aromatischen Sulfonamiden und Phosphor- und Phosphonsäureestern.

Die jeweils eingesetzte Menge an erfindungsgemässem Mittel (an erfindungsgemässer Wirkstoffkombination), die in das jeweilige Applikationsbad bzw. das nichtwässrige Lösungsmittel eingebracht wird, hängt vom jeweiligen Substrat und der Applikationsmethode ab. Diese Menge wird üblicherweise jedoch so bemessen, dass nach dem Aufziehen auf das jeweils zu schützende Material letzteres etwa 10 bis 2 000 ppm, vorzugsweise 100 bis 1 000 ppm der Wirksubstanzkombination, also an Barbiturat + Pyrethroid (an Komponente (A) + (B)) enthält, wobei die obere Grenze weitgehend durch Ueberlegungen ökonomischer Natur gegeben ist, während die untere Grenze von Kriterien wie angestrebte Breite und Dauerhaftigkeit der Schutzwirkung abhängt. Dies ergibt z.B. für das Ausziehverfahren bei einem Flottenverhältnis von 1:20 Konzentrationen von 0,001 bis 1 g Wirksubstanz/1 Behandlungsbad, je nach erreichbarem Ausziehgrad. Beim Foulardverfahren sind Konzentrationen bis 2 g Wirksubstanz pro Liter möglich.

In den nachfolgenden Herstellungsvorschriften und Beispielen sind, sofern nichts anderes angegeben ist, Teile Gewichtsteile und Prozente Gewichtsprozente. Unter den Bezeichnungen "Permethrin" und "Cypermethrin" sind die vorstehend definierten Verbindungen der Formel (4) mit $Y_1' = Y_4 = Y_4'$ = Wasserstoff bzw. mit $Y_1'$ = CN und $Y_4 = Y_4'$ = Wasserstoff zu verstehen.

Herstellungsvorschriften für einige 5-(Pyridyloxyphenylcarbamoyl)-barbitursäuren der Formel (1):

1. 1,60 g (0,007 Mol) 1,3-Dimethyl-5-äthoxycarbonylbarbitursäure und 1,78 g (0,007 Mol) 4-(5-Trifluormethylpyrid-2-yloxy)-anilin werden in 20 ml Toluol suspendiert und 16 Stunden auf Rückflusstemperatur erhitzt, wobei Aethanol entweicht. Nach Abkühlen wird der Niederschlag abfiltriert, mit Toluol nachgewaschen und getrocknet. Man erhält so 1,3-Dimethyl-5-[4-(5-Trifluormethylpyrid-2-yloxy)-phenylcarbamoyl]-barbitursäure der Formel

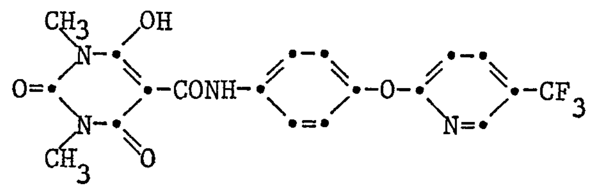

(101)

mit einem Schmelzpunkt von 180-181°C.

2. 7,8 g (0,05 Mol) 1,3-Dimethyl-barbitursäure und 14,0 g (0,05 Mol) 4-(3,5-Dichlorpyrid-2-yloxy)-phenylisocyanat werden in 50 ml Xylol suspendiert und tropfenweise mit 1 g Triäthylamin versetzt. Die Temperatur steigt auf 45 bis 50°C. Nach weiterer Zugabe von 50 ml Xylol wird das Gemisch 18 Stunden lang bei dieser Temperatur gerührt. Dann wird 1/3 des Xylols abdestilliert. Nach Abkühlung wird der Niederschlag filtriert, mit Xylol nachgewaschen, mehrmals mit HCl suspendiert und anschliessend gründlich mit Wasser gewaschen und getrocknet. Man erhält so 1,3-Dimethyl-5-[4-(3,5-dichlorpyrid-2-yloxy)-phenylcarbamoyl]-barbitursäure der Formel

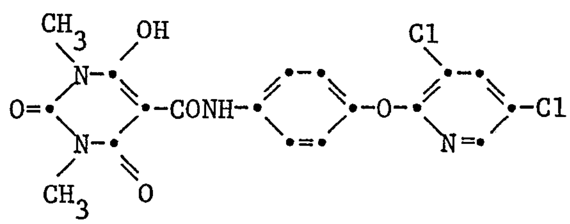

(102)

mit einem Schmelzpunkt von 234-235°C.

Verfährt man wie in den Herstellungsvorschriften 1 oder 2 und verwendet die entsprechenden Ausgangsprodukte, so erhält man in analoger Weise die Verbindungen der Formeln

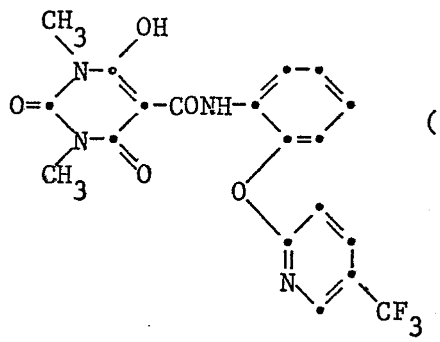

(103) ,

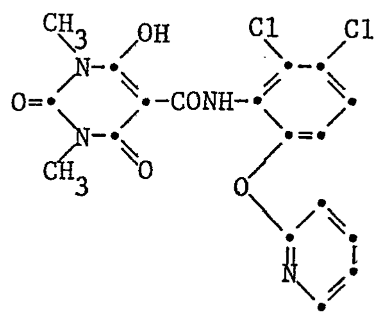

(104)

Schmelzpunkt: 241-242°C, und

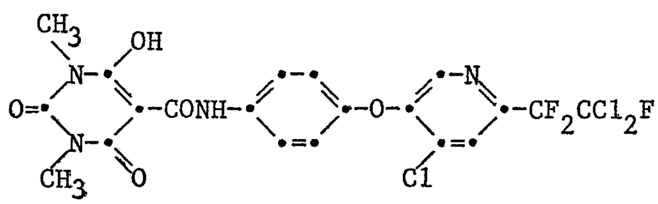

(105),

sowie die in nachstehender Tabelle 1 angeführten Verbindungen der Formel

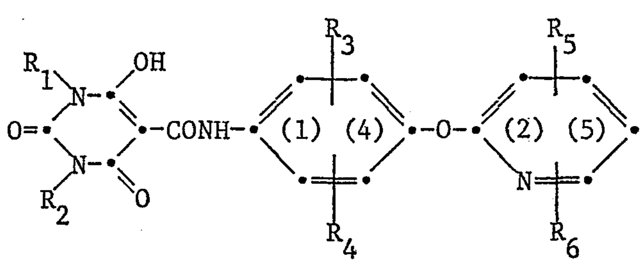

Tabelle 1

| Verbindung Nr. | $R_1$ | $R_2$ | $R_3$ | $R_4$ | $R_5$ | $R_6$ | Schmelzpunkt (°C) |
|---|---|---|---|---|---|---|---|
| 106 | $CH_3$ | $CH_3$ | 3-Cl | 5-Cl | 3-Cl | 5-$CF_3$ | 205-206 |
| 107 | $CH_3$ | $CH_3$ | 3-Cl | 5-Cl | 5-$CF_3$ | H | 232-233 |
| 108 | $CH_2$-CH=$CH_2$ | $CH_3$ | H | H | 5-$CF_3$ | H | 105-107 |
| 109 | Cyclopropyl | $CH_3$ | H | H | 5-$CF_3$ | H | 142-144 |
| 110 | $CH_3$ | $CH_3$ | 3-Cl | H | 3-Cl | 5-$CF_2CCl_2F$ | |
| 111 | $CH_3$ | $CH_3$ | H | H | 3-Cl | 5-$CF_2CClF_2$ | |
| 112 | $CH_3$ | $CH_3$ | 2-$CH_3$ | 6-$CH_3$ | 3-Cl | 5-$CF_3$ | |
| 113 | $CH_3$ | $CH_3$ | 2-$CH_3$ | 6-$CH_3$ | 3-Cl | 5-Cl | 251-253 |

Beispiel 1: Von einer Mischung (1:1) aus der Verbindung der Formel (101) und Permethrin wird eine 0,4%ige Stammlösung in Aethylenglykolmonomethyläther bereitet. Dann werden bei Zimmertemperatur wässrige Applikationsflotten hergestellt, die in 120 ml destilliertem Wasser 0,12 ml eines Netz- und Dispergiermittels, 0,6 ml Ameisensäure 1:10 und 0,2 ml, 0,1 ml bzw. 0,05 ml der 0,4%igen Stammlösung enthält. Dann werden jeweils 3 g schwere Wollflanell-Gewebestücke mit heissem Wasser durchnetzt und bei Zimmertemperatur eingegeben. Unter ständigem Umziehen der Wollmuster wird die Badtemperatur innerhalb 20 Minuten auf 98°C erhöht und 60 Minuten bei 98°C gehalten. Dann wird abgekühlt, die Wollmuster werden zweimal 3 Minuten mit destilliertem Wasser gespült, von Hand abgequetscht und an der Luft getrocknet. Die Wirkstoffkonzentration beträgt 250, 125 bzw. 60 ppm, berechnet auf das Wollgewicht.

Das so getrocknete Muster wird der Mottenechtheitsprüfung (Frassschutz gegen Kleidermotte Tineola bisselliella Hum.) sowie der Echtheitsprüfung gegen Larven des Pelzkäfers (Attagenus piceus Ol.) und Teppichkärfers (Anthrenus vorax Wat.) gemäss der Vorschrift des schweizerischen Normenverbandes SNV 195901 unterworfen.

Es werden jeweils Larven von Anthrenus vorax und 6 bis 7 Wochen alte Larven von Attagenus piceus zur Prüfung verwendet. Aus den behandelten Wollflanellmustern werden Stücke gleicher Grösse ausgeschnitten und 14 Tage lang bei konstanter Temperatur (28°C) und konstanter relativer Luftfeuchtigkeit (65%) dem Angriff (Frass) von je 15 Larven des entsprechenden Schädlings ausgesetzt. Die Beurteilung erfolgt einerseits nach dem relativen Gewichtsverlust des Prüflings und andererseits nach der Anzahl noch lebender Organismen.

Die geprüfte Wirkstoffmischung zeigt eine ausgezeichnete Wirkung gegen alle 3 verwendeten Schädlinge, und zwar bei allen verwendeten Konzentrationen.

Verwendet man eine Mischung (1:1) aus der Verbindung der Formel (101) und Cypermethrin, 3-(2,2-Dichlorvinyl)-2,2-dimethylcyclopropancarbonsäure-(4-fluor-3-phenoxy-α-cyano-benzyl)ester (= Verbindung Nr. 201) oder 3-(2,2-Dichlorvinyl)-2,2-dimethylcyclopropancarbonsäure-(3-phenoxy-α-propin-1-yl-benzyl)ester (= Verbindung Nr. 202) bzw. jeweils eine 1:1-Mischung der Verbindung der Formel (102) mit Permethrin, Cypermethrin, der Verbindung Nr. 201 oder Nr. 202 und verfährt wie oben beschrieben, so erhält man ebenfalls ein vollständig motten- und käferecht ausgerüstetes Gewebe.

Setzt man in den vorstehend beschriebenen Mitteln (Wirkstoffmischungen) an Stelle der Verbindung der Formel (101) bzw. (102) als Barbituratkomponente eine oder mehrere der Verbindungen der Formeln (103) bis (113) ein, so erzielt man im beschriebenen

Ausrüstungsverfahren ebenfalls ausgezeichnete Schutzwirkung gegen Motten- und Käferlarven.

Beispiel 2: Im Ausrüstungsverfahren gemäss Beispiel 1 kann als Pyrethroidkomponente (Komponente (B)) auch eine oder mehrere der folgenden Verbindungen eingesetzt werden:

3-(2,2-Dichlorvinyl)-2,2-dimethylcyclopropancarbonsäure-(3-phenoxy-α-vinylbenzyl)ester und -(3-phenoxy-α-methyläthinylbenzyl)ester,

3-(2-Methyl-propen(1)yl)-2,2-dimethylcyclopropancarbonsäure-(4-fluor-3-phenoxybenzyl)-ester und -(4-fluor-3-phenoxy-α-cyano-benzyl)ester,

3-(2,2-Dichlorvinyl)-2,2-dimethylcyclopropancarbonsäure-(4-fluor-3-phenoxybenzyl)ester und -(4-fluor-3-phenoxy-α-äthinylbenzyl)ester,

3-(2,2-Dibromvinyl)-2,2-dimethylcyclopropancarbonsäure-(4-fluor-3-phenoxybenzyl)ester, -(4-fluor-3-phenoxy-α-cyanobenzyl)ester und -(4-fluor-3-phenoxy-α-äthinyl-benzyl)ester,

3-(2-Methyl-propen(1)yl)-2,2-dimethylcyclopropancarbonsäure-(4-fluor-3-(4-fluorphenoxy)-α-cyanobenzyl)ester,

3-(2,2-Dichlorvinyl)-2,2-dimethylcyclopropancarbonsäure-(4-fluor-3-(3-fluorphenoxy)benzylester, -(4-fluor-3-(3-fluorphenoxy)-α-cyano-benzyl)ester, -(4-fluor-3-(4-fluorphenoxy)benzyl)ester und -(4-fluor-3-(4-fluorphenoxy)-α-cyanobenzyl)ester,

3-(2,2-Dibromvinyl)-2,2-dimethylcyclopropancarbonsäure-(4-fluor-3-(3-fluorphenoxy)benzyl)ester, -(4-fluor-3-(3-fluorphenoxy)-α-cyano-benzyl)-ester und -(4-fluor-3-(4-fluorphenoxy)-α-cyanobenzyl)ester,

3-(2-Chlor-2-(4-chlorphenyl)vinyl)-2,2-dimethylcyclopropancarbonsäure-(4-fluor-3-phenoxy-α-cyanobenzyl)ester,

3-(2,2-Dichlorvinyl)-2,2-dimethylcyclopropancarbonsäure-(2-[oder 3-]-fluor-3-(3-[oder 4-]fluorphenoxy)-α-cyanobenzyl)ester, und/oder eine oder mehrere Verbindungen der folgenden Formeln:

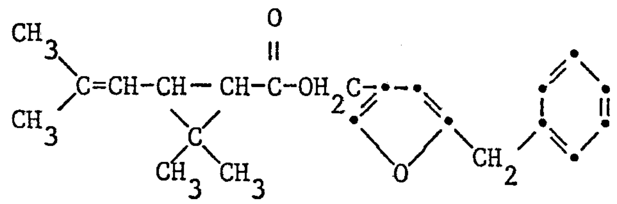

;

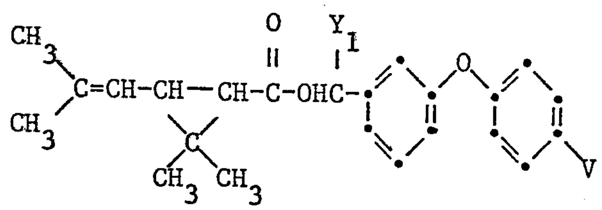

,

worin V = H, Cl, Br, F, $CH_3$ oder $NO_2$ und

$Y_1$ = H, CN, $CH_3$, $C_2H_5$, i-$C_3H_7$, $-\underset{Br}{C}=\underset{Br}{CH}$, -C≡CH, $-C\equiv C-CH_3$,

$-CH=CH_2$,

$-CH=CH-CH_3$, $-CH_2-CH=CH_2$ oder $-CH_2-CH=CHCl$;

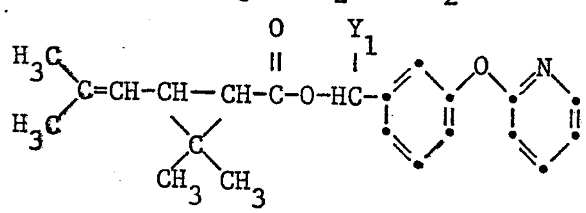

,

worin $Y_1$ = H, CN oder $CH_3$;

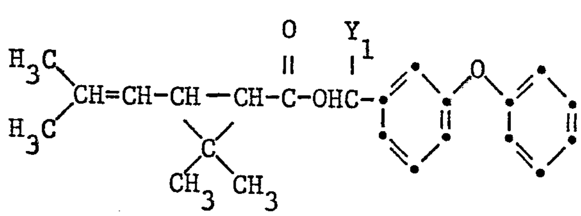

worin $Y_1$ = H, CN oder -C≡CH;

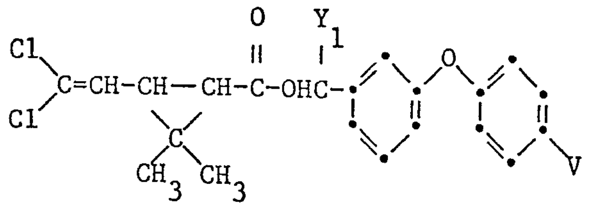

,

worin V = H, Cl, Br, F, $CH_3$ oder $NO_2$ und

$Y_1$ = H, CN, $CH_3$, $C_2H_5$, i-$C_3H_7$, $-\underset{Br}{C}=\underset{Br}{CH}$, $-C\equiv CH$, $-C\equiv C-CH_3$, $-CH=CH_2$,

$-CH=CH-CH_3$, $-CH_2-CH=CH_2$, $-CH_2-CH=CHCl$ oder $-C\equiv C-C_6H_5$;

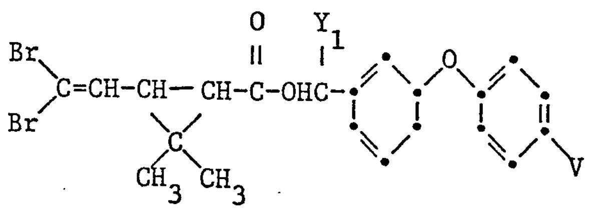

,

worin V = H, Cl, Br, F, $CH_3$ oder $NO_2$ und

$Y_1$ = H, CN, $CH_3$, $C_2H_5$, i-$C_3H_7$, $-\underset{Br}{C}=\underset{Br}{CH}$, $-C\equiv CH$, $-C\equiv C-CH_3$,

$-CH=CH_2$,

$-CH=CH-CH_3$, $-CH_2-CH=CH_2$, $-CH_2-CH-CHCl$ oder $-C\equiv C-C_6H_5$;

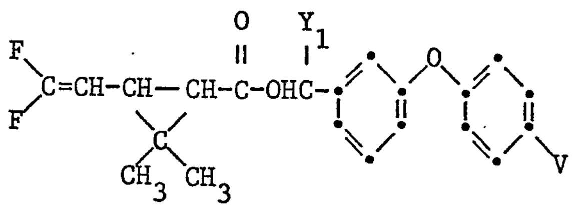

,

worin V = H, Cl, Br, F, $CH_3$ oder $NO_2$ und

$Y_1$ = H, CN, $CH_3$, $C_2H_5$, i-$C_3H_7$, $-\underset{Br}{C}=\underset{Br}{CH}$, $-C\equiv CH$, $-C\equiv C-CH_3$,

$-CH=CH_2$,

$-CH=CH-CH_3$, $-CH_2-CH=CH_2$, $-CH_2-CH=CHCl$ oder $-C\equiv C-C_6H_5$;

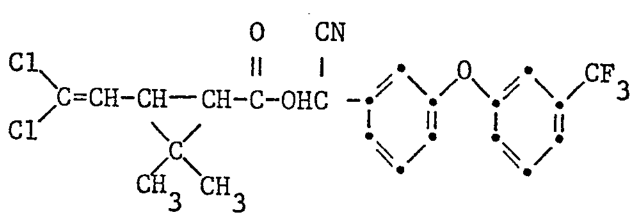

;

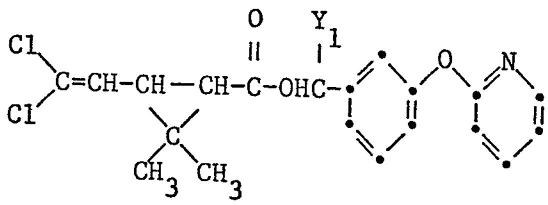 ,

worin $Y_1$ = H, CN oder $CH_3$;

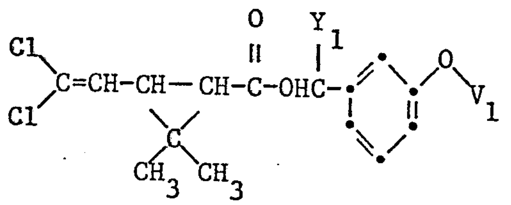 ,

worin $Y_1$ = H, CN oder $CH_3$ und

$V_1$ = $CH_2$-CH=$CH_2$, -$CH_2$-C≡CH, -$CH_2$-CH=CH-$CH_3$,

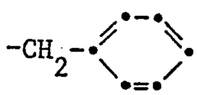 , 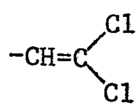 , 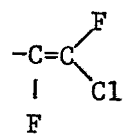 oder 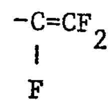;

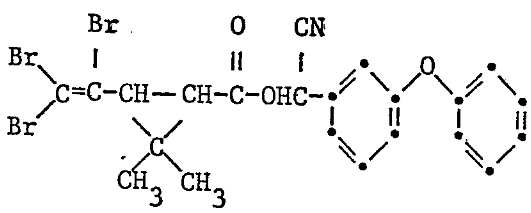 ;

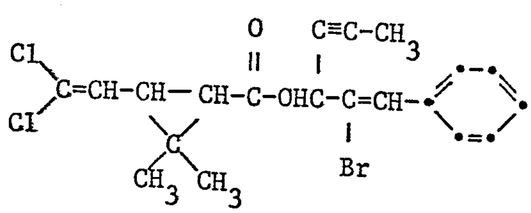 ;

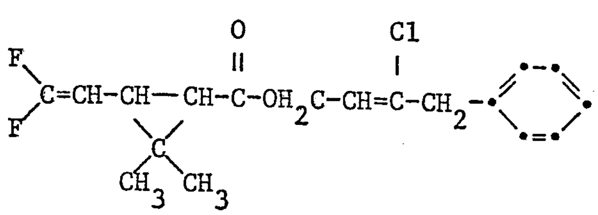 ;

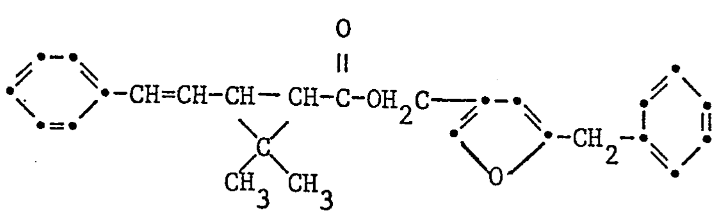 ;

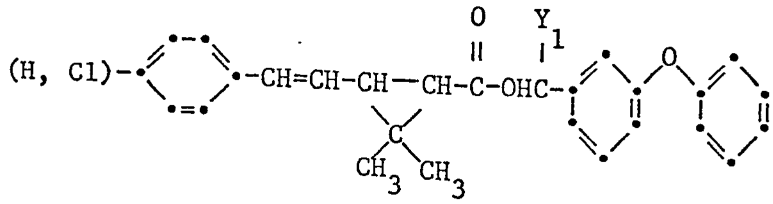

,

worin $Y_1$ = H, CN, $CH_3$, $C_2H_5$, i-$C_3H_7$, $-\underset{Br}{C}=\underset{Br}{CH}$, -C≡CH, -C≡C-$CH_3$,
-CH=$CH_2$,
-CH=CH-$CH_3$, -$CH_2$-CH=$CH_2$ oder -$CH_2$-CH=CHCl;

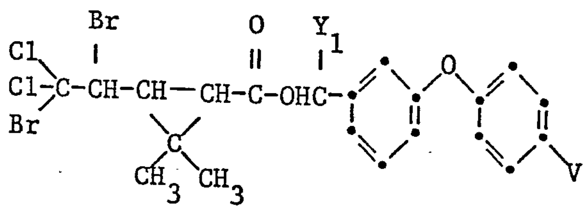

,

worin V = H, Cl, Br, F, $CH_3$ oder $NO_2$ und
$Y_1$ = H, CN, $CH_3$, $C_2H_5$, i-$C_3H_7$, $-\underset{Br}{C}=\underset{Br}{CH}$, -C≡CH, -C≡C-$CH_3$,
-CH=$CH_2$,
-CH=CH-$CH_3$, -$CH_2$-CH=$CH_2$ oder -$CH_2$-CH=CHCl;

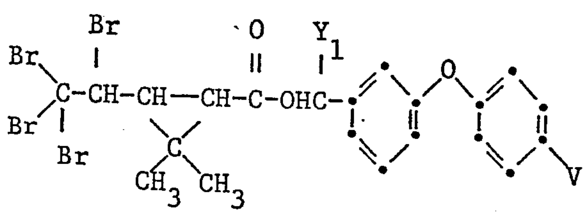

,

worin V = H, Cl, Br, F, $CH_3$ oder $NO_2$ und
$Y_1$ = H, CN, $CH_3$, $C_2H_5$, i-$C_3H_7$, $-\underset{Br}{C}=\underset{Br}{CH}$, -C≡CH, -C≡C-$CH_3$,
-CH=CH-$CH_3$, -$CH_2$-CH=$CH_2$ oder -$CH_2$-CH=CHCl;

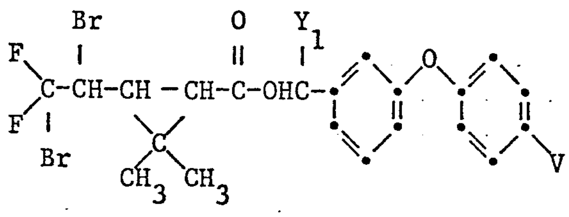,

worin V = H, Cl, Br, F, $CH_3$ oder $NO_2$ und

$Y_1$ = H, CN, $CH_3$, $C_2H_5$, i-$C_3H_7$, $-\underset{Br}{\underset{|}{C}}=\underset{Br}{\underset{|}{CH}}$, $-C{\equiv}CH$, $-C{\equiv}C-CH_3$,

$-CH=CH-CH_3$, $-CH_2-CH=CH_2$ oder $-CH_2-CH=CHCl$;

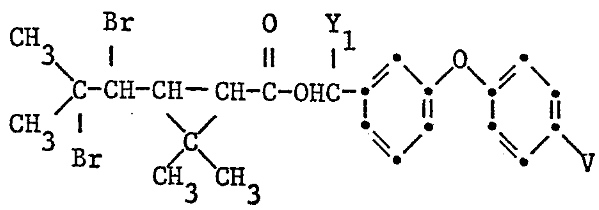,

worin V = H, Cl, Br, F, $CH_3$ oder $NO_2$ und

$Y_1$ = H, CN, $CH_3$, $C_2H_5$, i-$C_3H_7$, $-\underset{Br}{\underset{|}{C}}=\underset{Br}{\underset{|}{CH}}$, $-C{\equiv}CH$, $-C{\equiv}C-CH_3$,

$-CH=CH-CH_3$, $-CH_2-CH=CH_2$ oder $-CH_2-CH=CHCl$;

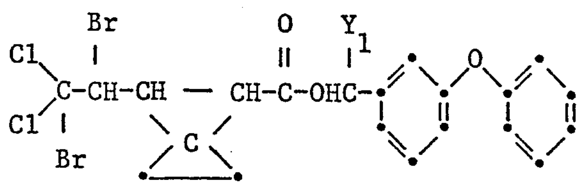,

worin $Y_1$ = H oder CN;

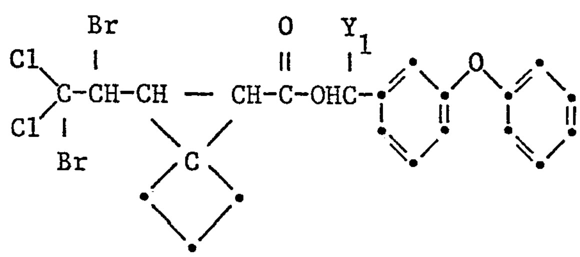,

worin $Y_1$ = H oder CN;

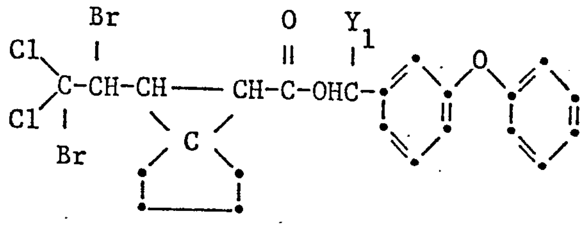

,

worin $Y_1$ = H oder CN;

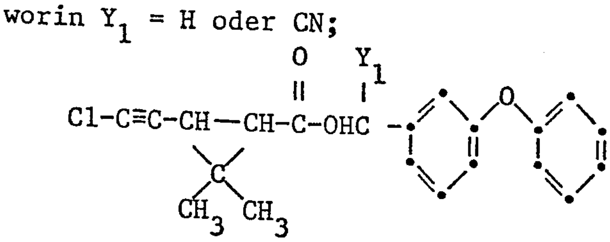

,

worin $Y_1$ = H, CN oder $-CH=CH-CH_3$;

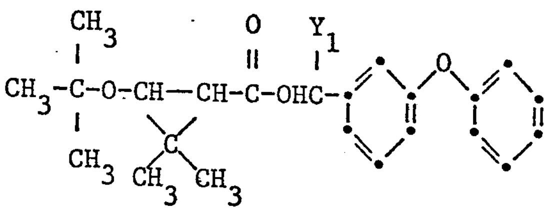

,

worin $Y_1$ = H oder CN;

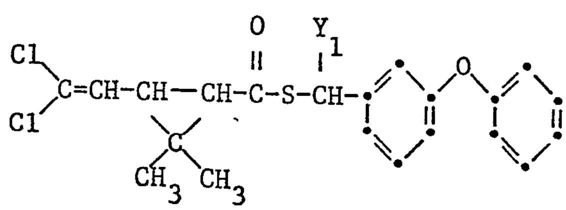

,

worin $Y_1$ = H, $CH_3$ oder CN;

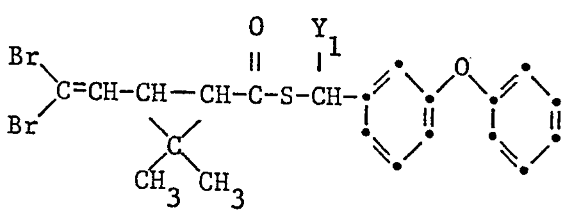

,

worin $Y_1$ = H oder $CH_3$;

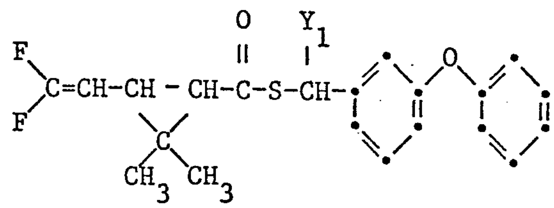,

worin X = H oder $CH_3$;

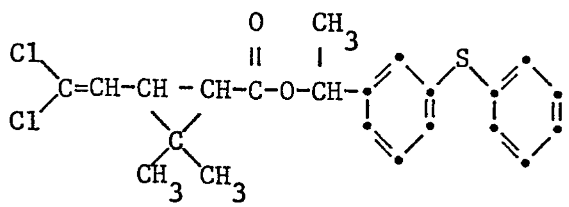,

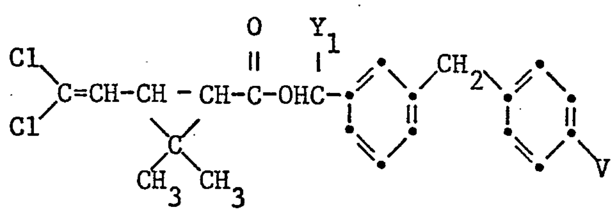,

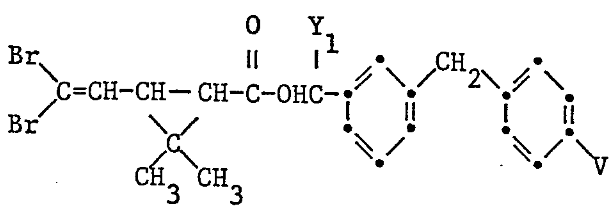,

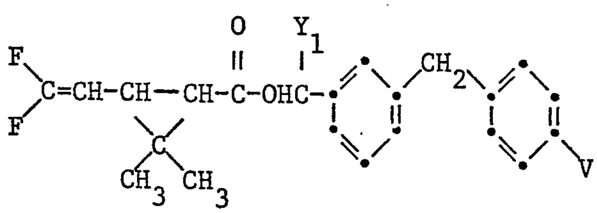,

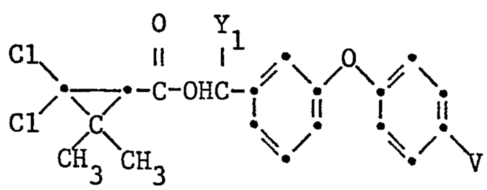,

worin jeweils

V = H, Cl, Br, F, $CH_3$ oder $NO_2$ und

$Y_1$ = H, CN, $CH_3$, $C_2H_5$, i-$C_3H_7$, $-\underset{Br}{\underset{|}{C}} = \underset{Br}{\underset{|}{CH}}$, $-C{\equiv}CH$, $-C{\equiv}C-CH_3$,

$-CH=CH_2$,

$-CH=CH-CH_3$, $-CH_2-CH=CH_2$, $-CH_2-CH=CHCl$ oder $-C{\equiv}C-C_6H_5$;

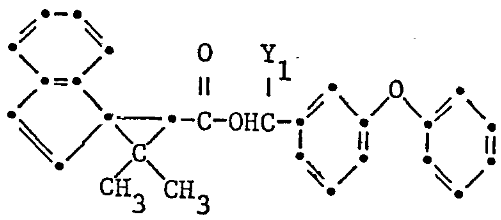
,

worin $Y_1$ = H, CN, $CH_3$ oder $-C{\equiv}C-CH_3$;

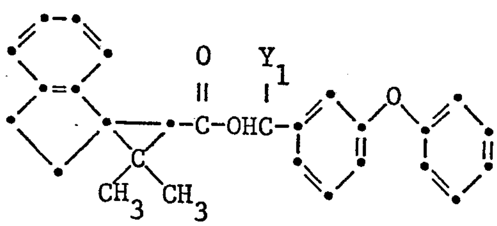
,

worin $Y_1$ = H, CN, $CH_3$ oder $-C{\equiv}C-CH_3$;

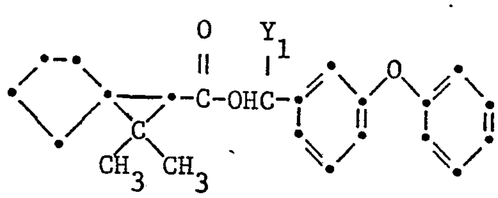
,

worin $Y_1$ = H, CN, $CH_3$ oder $-C{\equiv}C-CH_3$;

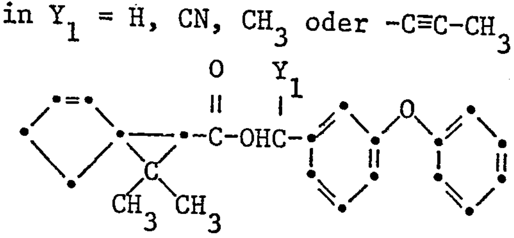
,

worin $Y_1$ = H, CN, $CH_3$ oder $-C{\equiv}C-CH_3$;

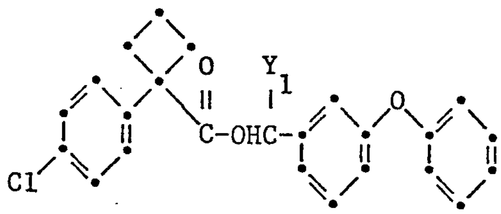
,

worin $Y_1$ = H, CN oder $-C{\equiv}CH$;

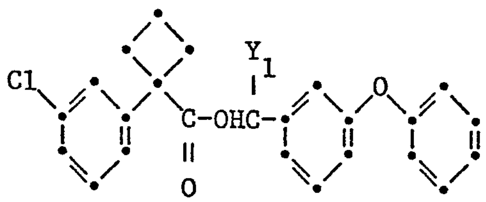
,

worin $Y_1$ = H oder CN;

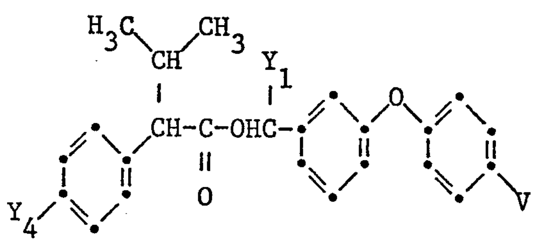
,

worin V = H, Cl, Br, F, $CH_3$ oder $NO_2$ und

$Y_1$ = H, CN, $CH_3$, $C_2H_5$, $i-C_3H_7$, $-\underset{Br}{C}=\underset{Br}{CH}$, $-C{\equiv}CH$, $-C{\equiv}C-CH_3$, $-CH=CH_2$,

$-CH=CH-CH_3$, $-CH_2-CH=CH_2$, $-CH_2-CH=CHCl$ oder $-C{\equiv}C-C_6H_5$

und $Y_4$ = H, $CH_3$, Cl, $NO_2$, CN, $-OCH_3$, $-O-CH\genfrac{}{}{0pt}{}{CH_3}{CH_3}$, $-O-CH_2-C{\equiv}CH$ oder $-O-CH_2-CH=CH_2$;

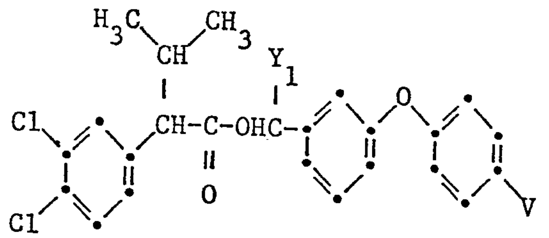

,

worin V = H, Cl, Br, F, $CH_3$ oder $NO_2$ und

$Y_1$ = H, CN, $CH_3$, $C_2H_5$, i-$C_3H_7$, $-\underset{Br}{\underset{|}{C}} = \underset{Br}{\underset{|}{CH}}$, $-C{\equiv}CH$, $-C{\equiv}C-CH_3$, $-CH=CH_2$,

$-CH=CH-CH_3$, $-CH_2-CH=CH_2$ oder $-CH_2-CH=CHCl$;

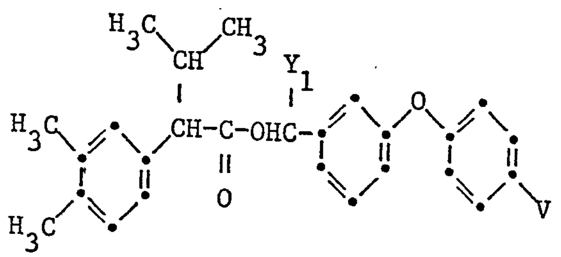

,

worin V = H, Cl, Br, F, $CH_3$ oder $NO_2$ und

$Y_1$ = H, CN, $CH_3$, $C_2H_5$, i-$C_3H_7$, $-\underset{Br}{\underset{|}{C}} = \underset{Br}{\underset{|}{CH}}$, $-C{\equiv}CH$, $-C{\equiv}C-CH_3$, $-CH=CH_2$,

$-CH=CH-CH_3$, $-CH_2-CH=CH_2$ oder $-CH_2-CH=CHCl$;

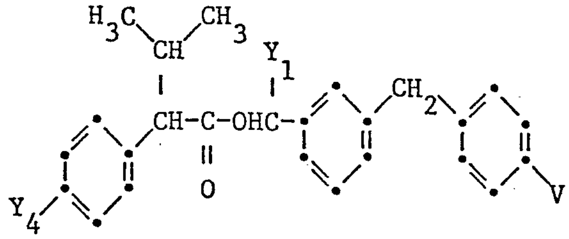

,

worin V = H, Cl, Br, F, $CH_3$ oder $NO_2$ und

$Y_1$ = H, CN, $CH_3$, $C_2H_5$, i-$C_3H_7$, $-\underset{Br}{C}=\underset{Br}{CH}$, -C≡CH, -C≡C-$CH_3$, -CH=$CH_2$,

-CH=CH-$CH_3$, -$CH_2$-CH=$CH_2$ oder -$CH_2$-CH=CHCl

und $Y_4$ = H, $CH_3$, Cl, $NO_2$, CN, -O$CH_3$, $-O-CH\genfrac{}{}{0pt}{}{CH_3}{CH_3}$, -O$CH_2$-C≡CH

oder -O-$CH_2$-CH=$CH_2$;

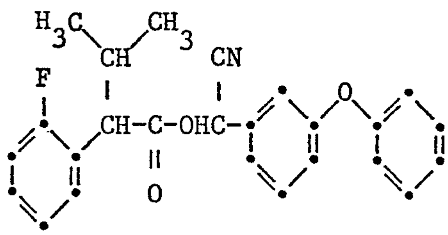

,

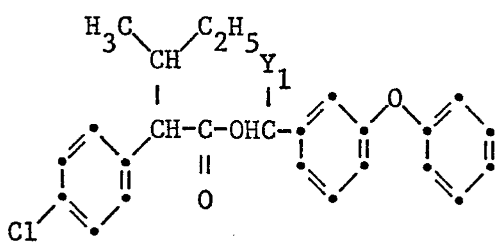

,

worin $Y_1$ = H oder CN;

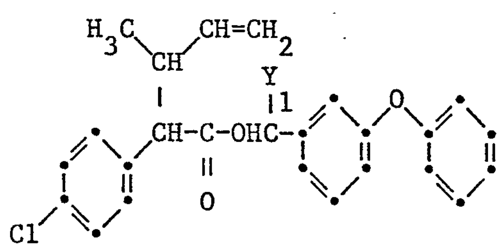

,

worin $Y_1$ = H oder CN;

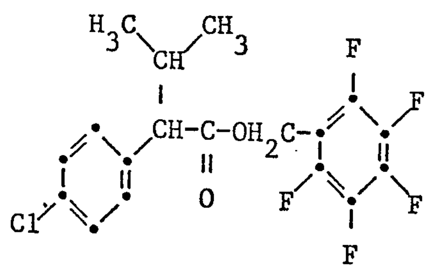

;

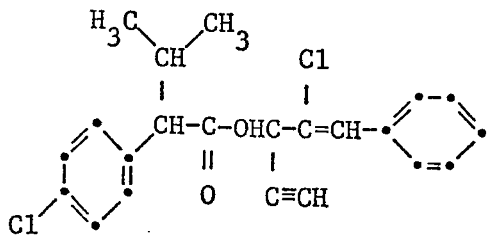

;

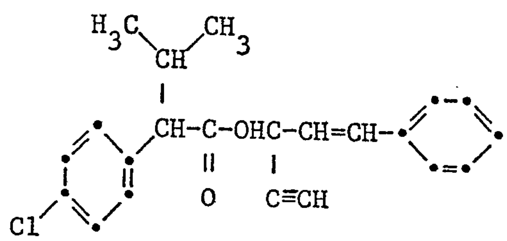

;

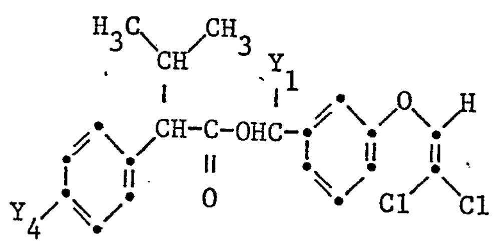

,

worin $Y_1$ = H, CN oder $CH_3$ und
$Y_4$ = H oder Cl;

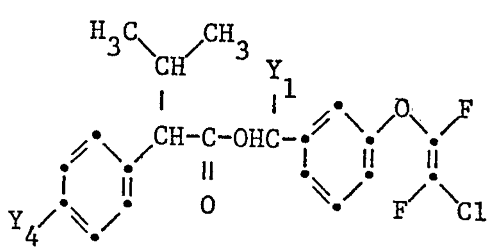

,

worin $Y_1$ = H, CN oder $CH_3$ und
$Y_4$ = H oder Cl;

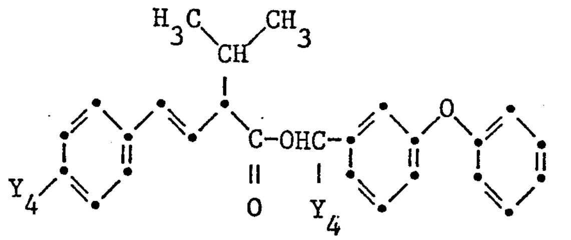
,

worin $Y_1$ = H, CN oder $CH_3$ und
$Y_4$ = H oder $CH_3$;

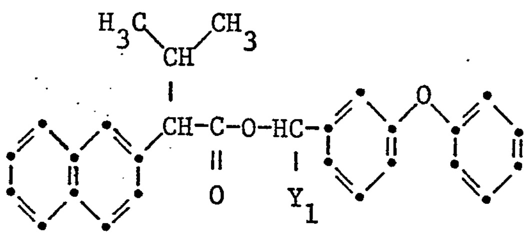
,

worin $Y_1$ = H oder CN;

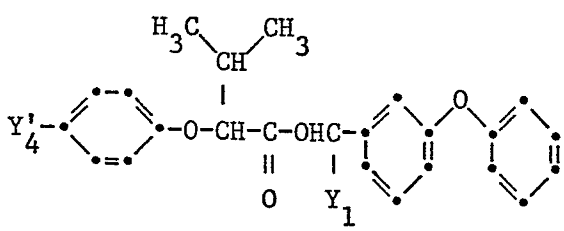
,

worin $Y_1$ = H oder CN und
$Y_4'$ = Cl, $CH_3$ oder H;

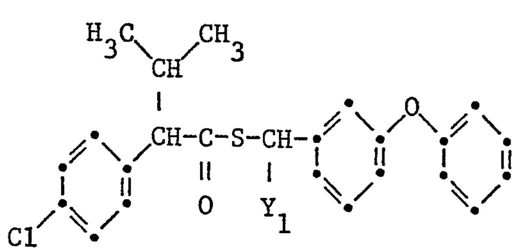
,

worin $Y_1$ = H, $CH_3$, -C≡CH oder CN;

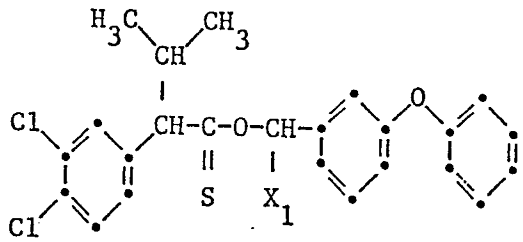

,

worin $Y_1$ = H oder CN;

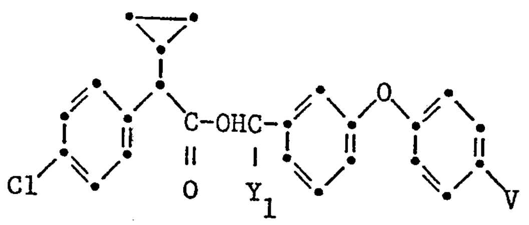

,

worin V = H, Cl, Br, F, $CH_3$ oder $NO_2$ und

$Y_1$ = H, CN, $CH_3$, $C_2H_5$, i-$C_3H_7$, -C = CH, -C≡CH, -C≡C-$CH_3$,

-CH=$CH_2$, Br Br

-CH=CH-$CH_3$, -$CH_2$-CH=$CH_2$ oder -$CH_2$-CH=CHCl.

Beispiel 3: Von einer Mischung (1:1) aus der Verbindung der Formel (101) und Permethrin wird eine 0,4%ige Stammlösung in Aethylenglykolmonomethyläther bereitet. 12,5 ml der Stammlösung werden mit Aethylenglykolmonomethyläther, welcher 0,65 g/l eines Netz- und Dispergiermittels enthält, auf 50 ml verdünnt (= Lösung Nr. 1). 25 ml der Lösung Nr. 1 werden mit Aethylenglykolmonomethyläther, welcher 0,5 g/l eines Netz- und Dispergiermittels enthält, auf 50 ml verdünnt (= Lösung Nr. 2). 25 ml der Lösung Nr. 2 werden erneut mit Aethylenglykolmonomethyläther, welcher 0,5 g/l eines Netz- und Dispergiermittels enthält, auf 50 ml verdünnt (= Lösung Nr. 3).

Von den Lösungen Nr. 1, 2 und 3 werden je 3 ml in Kristallisierschalen geleert und je eine geköderte Rondelle aus Wollflanell 3 Sekunden darin benetzt. Die feuchten Rondellen werden anschliessend zwischen Aluminiumfolien foulardiert, und zwar derart, dass die abgequetschten Rondellen je 50% Flotte aufgenommen haben. Die Konzentration an Wirkstoff auf den Rondellen beträgt dann der Reihe nach 500 ppm, 250 ppm und 125 ppm.

Die feuchten Rondellen werden an der Luft getrocknet und den gleichen biologischen Prüfungen unterworfen, wie in Beispiel 1 beschrieben.

Die geprüfte Wirkstoffmischung zeigt eine ausgezeichnete Wirkung gegen alle 3 Schädlinge, und zwar bei allen verwendeten Konzentrationen.

Verwendet man eine Mischung (1:1) aus der Verbindung der Formel (101) und Cypermethrin oder der Verbindung Nr. 201 oder 202 oder eine andere in Beispiel 1 angegebenen Wirkstoffkombination oder eine weitere sich aus den Beispielen 1 und 2 ergebende erfindungsgemässe Wirkstoffkombination und verfährt wie oben beschrieben, so erhält man ebenfalls ein vollständig motten- und käferecht ausgerüstetes Gewebe.

Beispiel 4: Es wird eine 10%ige Lösung einer Mischung (1:1) aus der Verbindung der Formel (101) und Permethrin in Aethylenglykolmonomethyläther hergestellt. Ein Volumenteil dieser Lösung wird mit 200 Volumenteilen eines zur Trockenreinigung geeigneten Lösungsmittels, z.B. einer passenden Benzinfraktion oder Perchloräthylen, verdünnt. Gewünschtenfalls können noch reinigungsfördernde Zusätze beigefügt werden. Wollartikel werden nun wie üblich in dieser Reinigungsflüssigkeit behandelt und anschliessend auf einen Lösungsmittelgehalt von ca. 100% des Wollgewichtes abgeschleudert. Sie zeigen nach dem Trocknen eine gute Schutzwirkung gegen die oben genannten keratinfressenden Schädlinge.

Beispiel 5: Es wird jeweils eine 0,5%ige Lösung einer Mischung (1:1) aus der Verbindung der Formel (102) und Permethrin in Methylenchlorid, Trichloräthylen oder einer tiefsiedenen Benzinfraktion angesetzt. Ein Wollartikel wird mit Hilfe einer üblichen Sprüheinrichtung mit dieser Lösung besprüht, sodass 2 x 15 $g/m^2$ an Wirkstofflösung appliziert werden. Bei einem Ausnützungseffekt des Aerosols von 30% befinden sich dann etwa 400 ppm an Wirkstoffkombination auf dem Material. Das so ausgerüstete Wollgewebe zeigt gute Schutzwirkung gegen die oben genannten keratinfressenden Schädlinge.

Verwendet man eine Mischung (1:1) aus der Verbindung der Formel (101) und Cypermethrin oder der Verbindung Nr. 201 oder 202 oder eine andere in Beispiel 1 angegebene Wirkstoffkombination oder eine weitere sich aus den Beispielen 1 und 2 ergebende erfindungsgemässe Wirkstoffkombination und verfährt wie in den Beispielen 4 und 5 beschrieben, so erhält man ebenfalls gegen den Befall durch Keratinschädlinge geschütztes Gewebe.

Die erfindungsgemässen Wirkstoffkombinationen können, wenn sie nicht direkt als solche zu Applikationsbädern zugesetzt werden, auch durch Zusatz von verschiedenen Trägern, Lösungsmitteln und/oder Hilfsmitteln formuliert werden. Besonders vorteilhafte Formulierungen, die lagerstabil sind, erhält man, wenn man die beiden erfindungsgemässen Wirkstoffkomponenten in der in der EP-A 74 335 angegebenen Weise formuliert, d.h. eine Formulierung herstellt, die neben den beiden Komponenten (A) und (B) noch ein oder mehrere aliphatische(s) oder cycloaliphatische(s) Amin(e) oder/und Amid(e) und deren Derivat(e) und gegebenenfalls ein oder mehrere organische(s) Lösungsmittel, Wasser, ein(en) oder mehrere Tensid(e) und/oder Emulgator(en) bzw. Dispergator(en) und/oder eine oder mehrere aliphatische Carbonsäure(n) enthält. Die erfindungsgemässen Wirkstoffkombinationen können also wie in den Beispielen 1-25 der genannten EP-A 74 335 beschrieben formuliert werden. Als Beispiele sollen die beiden folgenden Formulierungen dienen:

Beispiel 6:

5,3 Teile Permethrin,
8,0 Teile 1-Hydroxyäthyl-2-oleyl-imidazolin,
7,0 Teile mit 6-7 Mol Aethylenoxid äthoxyliertes Talgfettamin,
73,7 Teile Diäthylenglykoläthyläther und
1,0 Teile Milchsäure, racemisch,
werden gemischt. Zu dieser Mischung werden unter ständigem Rühren bei 45-55°C 5,0 Teile der Verbindung der Formel (102) gegeben, bis eine homogene Formulierung entsteht. Diese so erhaltene Mottenschutzformulierung ist lagerstabil, mit Wasser mischbar und sie führt bei der Applikation auf Keratinmaterial zu ausgezeichneten Motten- und Käferechtausrüstungen.

Beispiel 7: Die Formulierung folgender Zusammensetzung wird analog Beispiel 6 erhalten:

5,5 Teile Permethrin,
5,0 Teile der Verbindung der Formel (101)

20,0 Teile mit 6-7 Mol Aethylenoxid äthoxyliertes Talgfettamin,

5,0 Teile eines Blockpolymeren aus Propylenglykol und Aethylenoxid (mittleres Molekulargewicht: 4900, 80% hydrophobe Gruppen, 20% hydrophile Gruppen; HLB = 4),

7,0 Teile Rizinuspolyglykoläther

3,0 Teile Alkylphosphorsäurepartialester

54,5 Teile Isophoron (= 3,5,5-Trimethyl-2-cyclohexen-1-on).

Beispiel 8: Die Formulierung folgender Zusammensetzung wird analog Beispiel 6 erhalten:

5,5 Teile Permethrin

5,0 Teile der Verbindung der Formel (101)

45,0 Teile der Verbindung der Formel

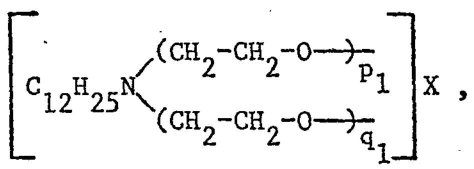

worin $p_1 + q_1 = 8$ und X einen sauren Phosphorsäurerest bedeutet,

20,0 Teile eines Blockpolymeren aus Propylenglykol und Aethylenoxid (mittleres Molekulargewicht: 6350; 50% hydrophobe und 50% hydrophile Gruppen; HLB = 15),

12,5 Teile Nonylphenoläthersulfat, Na-Salz, mit 40 Mol Aethylenoxid äthoxyliert,

7,0 Teile Aethylpolyglykol,

5,0 Teile Polyäthylenglykol 300.

Setzt man in den Formulierungen der Beispiele 6-8 an Stelle von Permethrin Cypermethrin oder die Verbindung Nr. 201 oder 202 oder an Stelle von Permethrin und Verbindung der Formel (101) bzw. (102) eine andere in Beispiel 1 angegebene Wirkstoffkombination oder eine weitere sich aus den Beispielen 1 und 2 ergebende erfindungsgemässe Wirkstoffkombination ein, so kommt man ebenfalls zu vorteilhaften lagerstabilen Formulierungen, die zum Ausrüsten von Keratinmaterial gegen den Befall durch Keratinschädlinge verwendet werden können.

Beispiel 9: Färbung und gleichzeitige Motten- und Käferechtausrüstung:

Auf einem Färbeapparat wird ein Stück Wollgewebe in 600 g einer Färbeflotte, die aus

1,5 g der Formulierung gemäss Beispiel 6, 7 oder 8,
30,3 g Glaubersalz,
24,0 g Schwefelsäure conc.,
3,0 g eines roten Farbstoffes der Formel

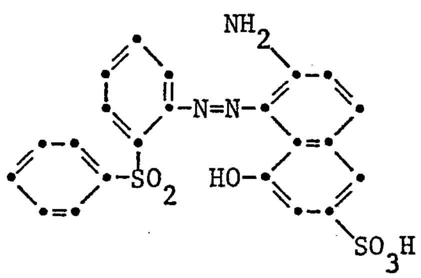

und

541,5 g entmineralisiertem Wasser

besteht, während 5 Minuten bei 40°C vorgenetzt (Flottenverhältnis 1:20). Die Flotte wird anschliessend innerhalb 45 Minuten auf ca. 98°C erhitzt. Nach einer einstündigen Behandlungsdauer bei dieser Temperatur wird das Wollgewebe gespült und getrocknet. Der Farbstoff und die beiden in der jeweiligen Formulierung enthaltenen Wirkstoffe sind auf das Gewebe aufgezogen. Das rotgefärbte Wollgewebe ist nach dieser einbadigen Behandlung vollständig gegen Motten- und Käferlarvenfrass geschützt. Dies wird durch Echtheitsprüfung gemäss SNV-Norm 195901 festgestellt.

Beispiel 10: Anwendung im Nachbehandlungsbad:

Auf einem Färbeapparat wird ein Stück Wollgewebe in 400 g einer Nachbehandlungsflotte, die aus

1 g der Formulierung gemäss Beispiel 6, 7 oder 8,
4 g Ameisensäure 85% und
395 g entmineralisiertem Wasser

besteht, während 5 Minuten bei 30°C vorgenetzt (Flottenverhältnis 1:20). Die Flotte wird dann innerhalb von 20 Minuten auf 45°C erwärmt. Nach einer 30 Minuten dauernden Behandlung bei dieser Temperatur, wobei das Wollgewebe unter ständiger Bewegung gehalten wird, wird letzteres in kaltem Wasser gut gespült und getrocknet. Das so behandelte Wollgewebe ist gegen die Larven von Wollschädlingen vollständig geschützt.

Patentansprüche:

1. Mittel zum Schützen von Keratinmaterial gegen den Befall durch Keratinschädlinge, dadurch gekennzeichnet, dass es

(A) ein oder mehrere 5-Phenylcarbamoylbarbiturat(e) der Formel

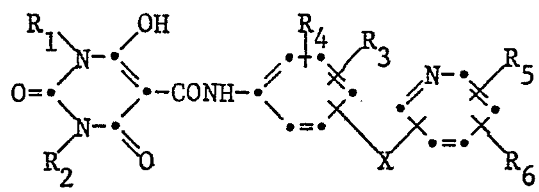

(1)

sowie deren tautomere Formen und Salze, worin $R_1$ und $R_2$ unabhängig voneinander $C_1$-$C_4$-Alkyl, $C_3$-$C_6$-Cycloalkyl, $C_2$-$C_4$-Alkenyl, Benzyl, Phenyl oder mit 1 bis 3 Substituenten aus der Gruppe Halogen, $C_1$-$C_4$-Alkyl, $C_1$-$C_4$-Alkoxy und Nitro substituiertes Phenyl,
$R_3$ und $R_4$ unabhängig voneinander Wasserstoff, Halogen, $C_1$-$C_4$-Halogenalkyl, $C_1$-$C_4$-Alkyl, $C_2$-$C_4$-Alkenyl, $C_3$-$C_6$-Cycloalkyl oder Methoxy,
$R_5$ und $R_6$ unabhängig voneinander Wasserstoff, Halogen, $C_1$-$C_4$-Alkyl, $C_1$-$C_4$-Halogenalkyl oder Methoxy und
X Sauerstoff oder Schwefel bedeuten,
und

(B) ein oder mehrere synthetische(s) Pyrethroid(e) enthält.

2. Mittel nach Anspruch 1, dadurch gekennzeichnet, dass es als Komponente (A) eine Verbindung der Formel (1) enthält, worin X Sauerstoff bedeutet und der Pyridinring über die 2-Stellung an das Sauerstoffatom gebunden ist.

3. Mittel nach Anspruch 1, dadurch gekennzeichnet, dass es als Komponente (A) eine Verbindung der Formel

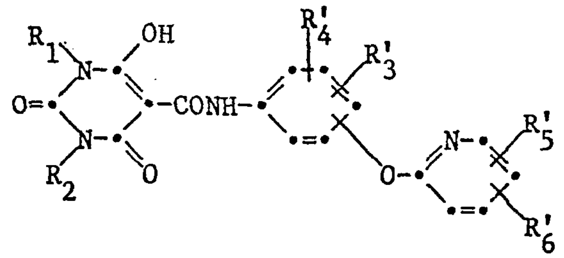

(2)

oder deren tautomere Formen und Salze enthält, worin $R_1$ und $R_2$ wie in Anspruch 1 definiert sind und $R_3'$, $R_4'$, $R_5'$ und $R_6'$ unabhängig voneinander Wasserstoff, Halogen, $C_1$-$C_4$-Alkyl, $C_1$-$C_4$-Halogenalkyl oder Methoxy bedeuten.

4. Mittel nach einem der Ansprüche 1-3, dadurch gekennzeichnet, dass es als Komponente (A) eine Verbindung der Formel (1) bzw. (2) enthält, worin $R_1$ Methyl, Aethyl, Cyclopropyl oder Allyl, vorzugsweise Methyl, $R_2$ Aethyl oder Methyl, vorzugsweise Methyl, $R_3$ und $R_4$ bzw. $R_3'$ und $R_4'$ unabhängig voneinander Wasserstoff, Halogen, insbesondere Chlor, oder $C_1$-$C_4$-Alkyl und $R_5$ und $R_6$ bzw. $R_5'$ und $R_6'$ unabhängig voneinander Wasserstoff, Halogen, insbesondere Chlor, oder $C_1$-$C_4$-Halogenalkyl, insbesondere Trifluormethyl, bedeuten und der Substituent

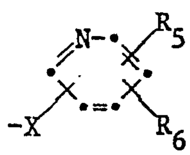 bzw. 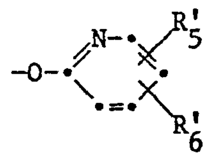 in ortho- oder para-Stellung

steht.

5. Mittel nach Anspruch 4, dadurch gekennzeichnet, dass es als Komponente (A) eine Verbindung der Formel (2) enthält, worin $R_1$ Allyl oder Methyl, vorzugsweise Methyl, $R_2$ Methyl, $R_3'$ und $R_4'$ unabhängig voneinander Wasserstoff, Chlor oder Methyl und $R_5'$ und $R_6'$ unabhängig voneinander Wasserstoff, Chlor oder Trifluormethyl bedeuten.

6. Mittel nach Anspruch 5, dadurch gekennzeichnet, dass es als Komponente (A) eine Verbindung der Formel (2) enthält, worin der Rest

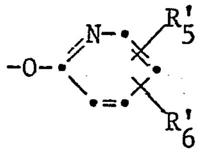 in para-Stellung steht und $R'_5$ Trifluormethyl und $R'_6$ Wasserstoff bedeuten.

7. Mittel nach einem der Ansprüche 1 bis 6, dadurch gekennzeichnet, dass es als Komponente (B) ein synthetisches Pyrethroid aus der Klasse der Cyclopropancarbonsäureester oder der α-Alkylphenylessigsäureester enthält.

8. Mittel nach Anspruch 7, dadurch gekennzeichnet, dass es als Komponente (B) ein Pyrethroid der allgemeinen Formel

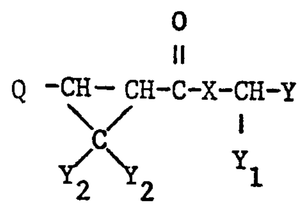 (3),

worin

Q $Br_2C{=}CBr-$, (H, Cl)-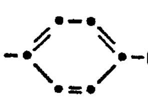-CH=CH-, Cl-C≡C-, Cl-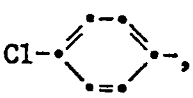-,

$(CH_3)_3C-O-$, 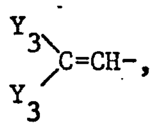, worin $Y_3$ für Cl, Br, $CF_3$, F oder $C_1$-$C_4$-Alkyl steht,

$CH_2{=}CH-CH_2-O-$ oder 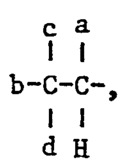, worin a, b, c und d unabhängig voneinander für Cl, Br oder F stehen, wobei c und d auch für Methyl stehen können,

X Sauerstoff oder Schwefel, $Y_1$ Wasserstoff, CN, $CH_3$, $C_2H_5$, $i-C_3H_7$, 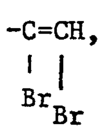, -C≡CH, $-C{\equiv}C-CH_3$, $-C{\equiv}C-C_6H_5$, $-CH{=}CH-CH_3$, $-CH_2-CH{=}CH_2$,

$-CH=CH_2$ oder $-CH_2-CH=CHCl$,

$Y_2$ Methyl oder beide $Y_2$ zusammen die Ergänzung zu einem Cyclopropan-, Cyclobutan- oder Cyclopentanring und

Y 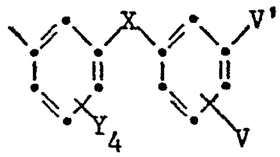 ,

worin $Y_4$ für Wasserstoff oder Fluor und V für Wasserstoff , Cl, Br, F, $CH_3$ oder $NO_2$ und V' für Wasserstoff stehen, wobei V' für den Fall, dass V Wasserstoff bedeutet, auch für $CF_3$ stehen kann, und X wie oben definiert ist; ferner Y

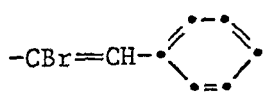 , 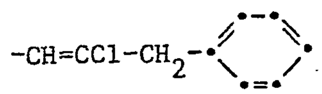 ,

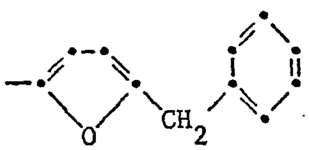 , 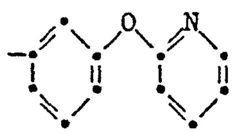 oder 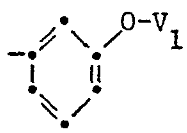 ,

bedeuten,

worin $V_1$ für $-CH_2-CH=CH_2$, $-CH_2-C\equiv CH$, $-CH_2-CH=CH-CH_3$,

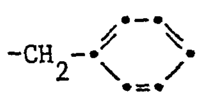 , 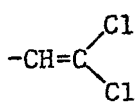 , $-CF=CFCl$ oder $-CF=CF_2$ steht,

oder der allgemeinen Formel

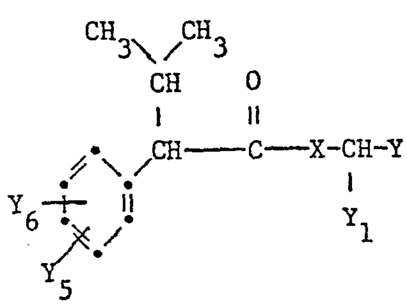 (3a),

worin X, Y und $Y_1$ wie in Formel (3) definiert sind, $Y_5$ Wasserstoff, $CH_3$, Cl, $NO_2$, $OCH_3$, $OCH(CH_3)_2$, $-OCH_2{\equiv}CH$ oder $OCH_2CH{=}CH_2$ und $Y_6$ Wasserstoff, $CH_3$, Cl, Br oder F oder $Y_5$ und $Y_6$ in ortho-Stellung gemeinsam die Ergänzung zu einem ankondensierten Benzolring bedeuten, enthält.

9. Mittel nach Anspruch 8, dadurch gekennzeichnet, dass es als Komponente (B) ein Pyrethroid der Formel (3) enthält, worin Q einen Rest der Formel

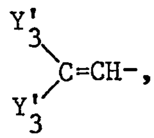

worin $Y'_3$ für Br, Cl oder $CH_3$ steht, X Sauerstoff und Y

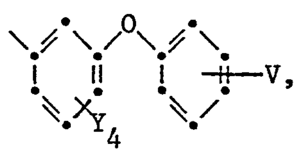

bedeuten, $Y_2$ für $CH_3$ und $Y_1$ für Wasserstoff, CN, $CH_3$, $-CH{=}CH_2$ , $-C{\equiv}CH$ oder $-C{\equiv}C{-}CH_3$ stehen.

10. Mittel nach einem der Ansprüche 1 bis 9, dadurch gekennzeichnet, dass es neben den Komponenten (A) und (B) noch übliche Träger und/oder Formulierungshilfsmittel, beispielsweise organische Lösungsmittel, Wasser, Säuren, Basen, Netz-, Dispergier- und/oder Emulgiermittel enthält.

11. Mittel nach Anspruch 10, dadurch gekennzeichnet, dass es neben den Komponenten (A) und (B) ein oder mehrere aliphatische(s) oder cycloaliphatische(s) Amin(e) oder/und Amid(e) und deren Derivat(e) und gegebenenfalls ein oder mehrere organische(s) Lösungsmittel, Wasser, ein oder mehrere Tensid(e) und/oder Emulgator(en) bzw. Dispergator(en), oder/und eine oder mehrere aliphatische Carbonsäuren enthält.

12. Mittel nach Anspruch 1, dadurch gekennzeichnet, dass das Mischverhältnis der beiden Wirkstoffkomponenten (A) und (B) zwischen 10 zu 1 und 1 zu 10 beträgt.

13. Mittel nach Anspruch 12, dadurch gekennzeichnet, dass das Mischverhältnis der beiden Wirkstoffkomponenten (A) und (B) zwischen 8 zu 1 und 1 zu 2 beträgt.

14. Verfahren zum Schützen bzw. Ausrüsten von Keratinmaterial, insbesondere von Wolle, Pelzen, Federn und Fellen, vor bzw. gegen den Befall durch Keratinschädlinge, dadurch gekennzeichnet, dass man das zu schützende Material mit einer Wirkstoffkombination enthaltend ein oder mehrere 5-Phenylcarbamoylbarbiturate der Formel (1) bzw. deren tautomere Formen und Salze und ein oder mehrere synthetische Pyrethroide behandelt.

15. Verfahren nach Anspruch 14, dadurch gekennzeichnet, dass man Verbindungen der Formel (1), worin X Sauerstoff, $R_1$ und $R_2$ $C_1$-$C_4$-Alkyl oder Allyl, insbesondere Methyl oder Aethyl, bedeuten und der Substituent 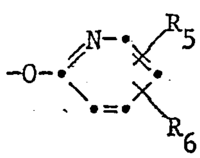 in ortho- oder para-Stellung steht, und

synthetische Pyrethroide der Formel (3) worin Q einen Rest der Formel

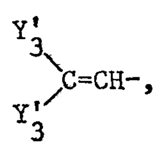

worin $Y_3'$ für Br, Cl oder $CH_3$ steht, X Sauerstoff und Y

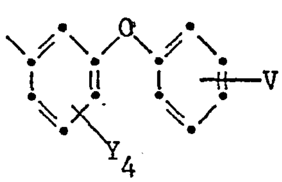

bedeuten, und $Y_2$ für $CH_3$ und $Y_1$ für Wasserstoff, CN, $CH_3$, $-CH=CH_2$, $-C\equiv CH$ oder $-C\equiv C-CH_3$ steht.

16. Verfahren nach Anspruch 14, dadurch gekennzeichnet, dass man ein Mittel einsetzt, das neben der Wirkstoffkombination noch übliche Träger und/oder Formulierungshilfsmittel, wie organische Lösungsmittel, Wasser, Säuren, Basen, Netz-, Dispergier- und/oder Emulgiermittel enthält.

17. Verfahren nach Anspruch 14, dadurch gekennzeichnet, dass man das zu schützende Material, insbesondere wollfaserhaltige Textilien, mit einer wässrigen Flotte, die eine in Anspruch 14 definierte Wirkstoffkombination enthält, nach dem Ausziehverfahren oder dem Foulardverfahren behandelt, wobei die wässrige Flotte noch übliche Textilhilfsmittel, wie Dispergatoren und/oder Farbstoffe, enthalten kann.

18. Verfahren nach Anspruch 14, dadurch gekennzeichnet, dass man das zu schützende Material mit einer organsichen Reinigungsflüssigkeit behandelt, die eine in Anspruch 14 definierte Wirkstoffkombination enthält.

19. Verfahren nach Anspruch 14, dadurch gekennzeichnet, dass man das zu schützende Material mit einem organischen Lösungsmittel besprüht, das eine in Anspruch 14 definierte Wirkstoffkombination enthält.

20. Verfahren nach einem der Ansprüche 14 bis 19, dadurch gekennzeichnet, dass man auf die zu schützenden Materialien die Wirkstoffkombination in einer Menge von 10 bis 2'000 ppm, vorzugsweise 100 bis 1'000 ppm, bezogen auf das zu schützende Material, aufbringt.

21. Verfahren nach einem der Ansprüche 14 bis 17 und 20, dadurch gekennzeichnet, dass man Wolltextilien im Färbebad nach dem Ausziehverfahren behandelt.

22. Verfahren nach einem der Ansprüche 14 bis 17 und 20, dadurch gekennzeichnet, dass man Wolltextilien im Nachbehandlungsbad nach dem Ausziehverfahren behandelt.

23. Das nach einem der Ansprüche 14 bis 22 ausgerüstete Keratinmaterial.

24. Keratinmaterial nach Anspruch 23, vorzugsweise wollhaltige Textilien, Pelze und Felle, enthaltend 10 bis 2'000 ppm, vorzugsweise 100 bis 1'000 ppm, einer im Anspruch 14 definierten Wirkstoffkombination.

25. Verwendung des (der) in Anspruch 1 oder 2 definierten Mittels (Wirkstoffkombination) zum Schützen von Keratinmaterial, insbesondere von Wolltextilien, gegen den Befall durch Keratinschädlinge.

FO 7.1/SL/sm*

0169168

Europäisches Patentamt

# EUROPÄISCHER RECHERCHENBERICHT

Nummer der Anmeldung

EP 85 81 0287

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | EP-A-0 105 030 (CIBA-GEIGY)<br>* Ansprüche * | 1-25 | A 01 N 53/00 //<br>(A 01 N 53/00<br>A 01 N 43:54 ) |
| | --- | | |
| Y,D | EP-A-0 135 155 (CIBA-GEIGY)<br>* Seite 8, vorletzter Zeile - Seite 9, Zeile 11 * | 1-25 | |
| | ----- | | **RECHERCHIERTE SACHGEBIETE (Int. Cl.4)** |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 04-10-1985 | DECORTE D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82